(19) Europäisches Patentamt / European Patent Office / Office européen des brevets

(11) **EP 3 715 249 B1**

(12) **EUROPÄISCHE PATENTSCHRIFT**

(45) Veröffentlichungstag und Bekanntmachung des Hinweises auf die Patenterteilung:
**23.06.2021  Patentblatt 2021/25**

(51) Int Cl.:
**B64C 39/00** *(2006.01)*      *B64C 11/00* *(2006.01)*

(21) Anmeldenummer: **20168135.0**

(22) Anmeldetag: **11.12.2018**

(54) **ANTRIEBSVORRICHTUNG FÜR EIN FLUGGERÄT**

PROPULSION DEVICE FOR AN AERIAL VEHICLE

DISPOSITIF D'ENTRAINEMENT POUR UN AÉRONEF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2017  DE 102017011890**

(43) Veröffentlichungstag der Anmeldung:
**30.09.2020  Patentblatt 2020/40**

(62) Dokumentnummer(n) der früheren Anmeldung(en) nach Art. 76 EPÜ:
**18825918.8 / 3 548 378**

(73) Patentinhaber: **CycloTech GmbH**
**4030 Linz (AT)**

(72) Erfinder:
• **Winderl, Michael**
  **92431 Neunburg vorm Wald (DE)**
• **Lanser, Stephan**
  **4211 Alberndorf (AT)**

(74) Vertreter: **Bosch Jehle Patentanwaltsgesellschaft mbH**
**Flüggenstraße 13**
**80639 München (DE)**

(56) Entgegenhaltungen:
**DE-C1- 19 637 833      US-A- 4 194 707**
**US-A1- 2007 200 029      US-A1- 2010 322 769**

EP 3 715 249 B1

**Beschreibung**

Gegenstand der Erfindung ist eine Antriebsvorrichtung für ein Fluggerät. Insbesondere betrifft die Erfindung einen Cyclogyro-Rotor mit verminderten Belastungen auf die Bauteile des Rotors.

Ein Cyclogyro-Rotor basiert auf dem Prinzip der Schuberzeugung mit rotierenden Flügeln. Im Gegensatz zu klassischen rotierenden Flügeln, wie etwa jenen, die bei der Antriebsvorrichtung eines Helikopters zum Einsatz kommen, ist die Rotationsachse der Flügel eines Cyclogyro-Rotors parallel zur Längsachse der Flügel ausgerichtet. Die Schubrichtung des gesamten Cyclogyro-Rotors liegt normal zur Rotationsachse.

Bei Cyclogyros handelt es sich um Fluggeräte, die Cyclogyro-Rotoren als Antriebsvorrichtung verwenden. Bei Cyclogyros handelt es sich darüber hinaus, genauso wie bei Helikoptern, um sog. Senkrechtstarter (auch VTOL-Fahrzeuge genannt, von englisch "Vertical Take-Off and Landing"), also um Fluggeräte, die in der Lage sind, senkrecht ohne Start- und Landebahn zu starten und zu landen.

Derartige Fluggeräte sind beispielsweise aus der US 2007/200029 A1 oder US 4 194 707 A bekannt.

Im stationären Betrieb sollen alle Flügel des Cyclogyro-Rotors idealerweise zu jedem Zeitpunkt bestmöglich zur Strömungsrichtung ausgerichtet sein, um jeweils einen maximalen Beitrag zum gesamten Schub bei minimal erforderlicher Antriebsleistung zu leisten. Die maximale Neigung der Flügel gegenüber der Strömungsrichtung beeinflusst direkt den Betrag des erzeugten Schubes. Durch die Drehung des Rotors muss die Neigung jedes Flügels während einer Umdrehung laufend geändert werden. Jeder Flügel eines Cyclogyro-Rotors vollzieht somit eine periodische Änderung des Neigungswinkels. Diese periodische Änderung des Neigungswinkels wird als Pitch-Bewegung bezeichnet.

Zur Erzeugung der Pitch-Bewegung sind unterschiedliche Pitch-Mechanismen bekannt. Beispielsweise kann jeder Flügel über ein oder mehrere Pleuel mit einer exzentrischen Lagerungsachse verbunden werden. Die sich daraus ergebende Pitch-Bewegung eines Flügels wiederholt sich dabei zyklisch mit jeder Rotorumdrehung. Folglich kann der Verlauf des Pitch-Winkels in Abhängigkeit der aktuellen Rotorverdrehung zu einer Fourier-Reihe entwickelt werden. In dieser Darstellung dominiert typischerweise der grundharmonische Anteil. Diesem überlagert ist ein Gleichanteil, sowie höherharmonische Anteile. Letztere stellen unerwünschte Schwingungen dar, welche die einzelnen Bauteile eines Cyclogyro-Rotors belasten. Da deren Amplitude und Phasenlage nicht direkt gewählt werden können, können sie auch nicht zur Optimierung der aerodynamischen Effizienz genutzt werden.

Aufgrund der im Betrieb schnellen Rotationsgeschwindigkeit des Cyclogyro-Rotors sind dessen Komponenten unter anderem Belastungen in Form von Trägheitskräften und -momenten unterworfen. Dies gilt insbesondere für die Flügel, da diese prinzipbedingt einen hohen Abstand von der Rotationsachse aufweisen, komplexe Bewegungen ausführen und dabei einen verhältnismäßig hohen Anteil an der Gesamtmasse des Cyclogyro-Rotors bilden.

Bei typischer Ausführung eines Cyclogyro-Rotors wird dabei ein Teil der auf den Flügel wirkenden Zentrifugalkraft an einer Seite des Pleuel eingeleitet. Die durch das Pleuel aufgezwungene Pitch-Bewegung erzeugt in Folge der Massenträgheit des Flügels zusätzliche Kräfte in Ersterem. Die zweite Seite des Pleuels ist mit einer exzentrisch gelagerten Offset-Scheibe (bzw. direkt mit einem Offset-Pin) verbunden. Unabhängig von der Anzahl der Flügel resultiert daraus eine Belastung auf die exzentrische Lagerungsachse in Form einer radial nach außen wirkenden Kraft. Das zeitliche Mittel dieser Kraft steigt in guter Näherung linear mit dem maximalen Neigungswinkel des Flügels und quadratisch mit der Rotationsgeschwindigkeit an.

Diese Belastung stellt eine große Herausforderung beim Entwurf eines Cyclogyro-Rotors dar. Im Hinblick auf den zur Verfügung stehenden Bauraum und die im Luftfahrtbereich typischen Leichtbauanforderungen kann die exzentrische Lagerungsachse nicht beliebig stabil ausgeführt werden.

Typischerweise ist die Position der exzentrischen Lagerungsachse zur Änderung des Schubs verstellbar ausgeführt. Eine dafür notwendige Verstelleinheit kann durch die auftretenden Kräfte überlastet werden. Dies hat zur Folge, dass sich der exzentrische Lagerpunkt weiter von der Rotationsachse entfernt, woraus ein höherer maximaler Neigungswinkel und in Folge eine höhere Belastung der exzentrischen Lagerungsachse resultiert. Daraus resultiert ein instabiles Verhalten, welches in der Regel zur Zerstörung des Cyclogyro-Rotors führt. Zusätzlich erhöht die Belastung an der exzentrischen Lagerungsachse den Energieverbrauch in der Verstelleinheit und schränkt deren Dynamik ein.

Aufgabe der vorliegenden Erfindung ist es daher, die vorstehend genannten Belastungen auf die exzentrische Lagerungsachse eines Cyclogyro-Rotors bei hohen Drehzahlen zu reduzieren.

Diese Aufgabe wird durch die Antriebsvorrichtung für ein Fluggerät mit den Merkmalen gemäß Anspruch 1 gelöst. Vorteilhafte Ausgestaltungen der vorliegenden Erfindung sind in den Unteransprüchen 2 bis 9 angegeben.

Erfindungsgemäß wird eine Antriebsvorrichtung für ein Fluggerät bereitgestellt, die folgende Komponenten umfasst: einen Flügel, der entlang einer Kreisbahn um eine Drehachse der Antriebsvorrichtung drehbar ist; einen Pitch-Mechanismus mit einer Kopplungsvorrichtung und einer Lagerungsvorrichtung. Dabei ist der Flügel durch die Lagerungsvorrichtung um eine Flügel-Lagerungsachse parallel zur Drehachse der Antriebsvorrichtung schwenkbar gelagert. Die erfindungsgemäße Antriebsvorrichtung umfasst des Weiteren eine Offset-Vorrichtung, an die der Flügel durch die Kopplungsvorrichtung in einem Anbindungspunkt angekoppelt ist. Die Offset-Vorrichtung definiert eine exzentrische Lagerungsachse, die in einem einstellbaren Offset-Abstand parallel zur Drehachse der Antriebsvorrichtung gelagert ist,

sodass die Rotation des Flügels entlang der Kreisbahn um die Drehachse der Antriebsvorrichtung eine Pitch-Bewegung des Flügels bewirkt, wenn der Offset-Abstand auf einen Wert ungleich Null eingestellt ist. Die Kopplungsvorrichtung ist an den Flügel in einem Ankopplungspunkt angekoppelt, wobei der Ankopplungspunkt derart positioniert ist, dass die Ebene, die die Flügel-Lagerungsachse und den Ankopplungspunkt umfasst, und die Tangentialebene an die Kreisbahn durch die Flügel-Lagerungsachse einen bestimmten, nicht-verschwindenden Winkel einschließen, wenn der Offset-Abstand auf Null eingestellt wird. Dabei beträgt der bestimmte, nicht-verschwindende Winkel derart eingestellt ist, dass der Winkel zwischen der Ebene, die die Flügel-Lagerungsachse und den Ankopplungspunkt umfasst, und der Ebene, die die Drehachse der Antriebsvorrichtung und die Verbindungsstrecke von dem Ankopplungspunkt zur Drehachse umfasst, etwa 90°, wenn der Offset-Abstand auf Null eingestellt wird. Erfindungsgemäß liegt der Ankopplungspunkt der Kopplungsvorrichtung an den Flügel außerhalb des Flügelprofils.

Dadurch, dass die exzentrische Lagerungsachse, die von der Offset-Vorrichtung definiert wird, in einem Offset-Abstand parallel zur Drehachse der Antriebsvorrichtung exzentrisch gelagert ist, ergibt sich bei Ankopplung des Flügels durch die Kopplungsvorrichtung eine Pendelbewegung des Flügels um die Flügel-Lagerungsachse des Flügels. Diese Pendelbewegung wird als Pitch-Bewegung bezeichnet.

Erfindungsgemäß wird die Pitch-Bewegung durch den Winkel beschrieben, der von der Tangente bzw. Tangentialebene an die Kreisbahn durch die Flügel-Lagerungsachse und der Profilsehne des Flügels eingeschlossen wird. Es ist vorteilhaft, wenn die Pitch-Bewegung in einem Winkelbereich von - 50° bis + 50° um die Tangente an die Kreisbahn erfolgt. Bei Verwendung dieses Winkelbereichs können relevante Schubkräfte erzeugt werden. Bei einer symmetrischen Pitch-Bewegung bezüglich der Tangente an die Kreisbahn wird der Flügel derart gegenüber dem Flügel-Lagerungspunkt und dem Ankopplungspunkt positioniert, dass die Profilsehne und die Tangente an die Kreisbahn parallel sind, wenn der Offset-Abstand Null ist. Wird die Profilsehne bei Offset-Abstand Null bereits verdreht gegenüber der Tangente an die Kreisbahn positioniert, folgt daraus ein nichtverschwindender, aber konstanter Pitch-Winkel bei Offset-Abstand Null, und folglich eine asymmetrische Pitch-Bewegung bezüglich der Tangente an die Kreisbahn bei einem nicht-verschwindenden Offset-Abstand. Es kann daher vorteilhaft sein, dass die Pitch-Bewegung asymmetrisch um die Tangente an die Kreisbahn erfolgt; d.h. in diesem Fall ist der maximale Winkel der Pitch-Bewegung oberhalb der Tangente größer als der maximale Winkel unterhalb der Tangente; oder umgekehrt.

Dadurch, dass der bestimmte, nicht-verschwindende Winkel bei Offset-Abstand gleich Null eingestellt wird, ist die Definition des bestimmten, nicht verschwindenden Winkels eindeutig. Bei nicht-verschwindendem Offset-Abstand würde sich dieser Winkel in Abhängigkeit des Pitch-Winkels stets ändern.

Unter der Profilsehne (englisch "chord") versteht man die Verbindungslinie zwischen Profilnase (englisch "leading edge") und Profilhinterkante (englisch "trailing edge") eines Flügels.

Profilnase und Profilhinterkante sind durch die Schnittpunkte der Profilmittellinie mit der Profilkontur gegeben. Bei der Profilmittellinie (auch als Skelettlinie, Wölbungslinie oder Krümmungslinie bezeichnet; englisch "camber line") handelt es sich um eine Linie, die aus den Mittelpunkten zwischen der Ober- und Unterseite des Flügelprofils senkrecht zur Profilsehne besteht. Die Profilmittellinie steht in Beziehung zur Asymmetrie zwischen der Ober- und Unterseite des Flügelprofils. Bei symmetrischen Profilen entspricht die Profilmittellinie der Profilsehne. Bevorzugt kommen symmetrische Profile zum Einsatz. Die Erfindung ist jedoch nicht auf symmetrische Profile beschränkt.

Dadurch, dass der Ankopplungspunkt derart positioniert ist, dass die Ebene, die die Flügel-Lagerungsachse und den Ankopplungspunkt umfasst, und die Tangentialebene an die Kreisbahn durch die Flügel-Lagerungsachse einen bestimmten, nicht-verschwindenden Winkel einschließen, wenn der Offset-Abstand auf Null eingestellt wird, können höher harmonische Anteile der Pitch-Bewegung des Flügels beeinflusst und reduziert werden.

Es wird an dieser Stelle betont, dass der erfindungsgemäße Effekt vollkommen unabhängig von der speziellen Geometrie und Ausgestaltung des Flügels bzw. Flügelprofils auftritt. Erfindungsgemäß kommt es nur auf den Winkel an, der von der Tangentialebene an die Kreisbahn durch die Flügel-Lagerungsachse und der Ebene, die die Flügel-Lagerungsachse und den Ankopplungspunkt umfasst, bzw. der von der Tangente an die Kreisbahn im Flügel-Lagerungspunkt und der Verbindungsgeraden durch den Flügel-Lagerungspunkt und den Ankopplungspunkt eingeschlossen wird.

Eine Pitch-Bewegung tritt auf, wenn der Offset-Abstand auf eine Wert ungleich Null eingestellt wird. Die Position des Ankopplungspunkt wird erfindungsgemäß also in einer Konfiguration bestimmt, in der die exzentrische Lagerungsachse, die durch die Offset-Vorrichtung definiert wird, und die Drehachse der Antriebsvorrichtung übereinstimmen. Für den Betrieb der Antriebsvorrichtung ist es zweckmäßig, den Offset-Abstand auf einen nicht-verschwindenden Wert einzustellen, um dadurch die Pitch-Bewegung zu bewirken. Bei Vorhandensein des nicht-verschwindenden Offset-Abstands wird Schub in eine bestimmte Richtung erzeugt.

Die Pitch-Bewegung des Flügels wiederholt sich zyklisch mit jeder Rotorumdrehung. Der Verlauf des Pitch-Winkels kann daher in Abhängigkeit der aktuellen Rotorverdrehung in eine Fourier-Reihe entwickelt werden. In dieser Darstellung dominiert typischerweise der grundharmonische Anteil. Diesem überlagert ist ein Gleichanteil, sowie die vorstehend genannten höher harmonische Anteile.

Der Ankopplungspunkt der Kopplungsvorrichtung an den Flügel vollführt im Betrieb der Antriebsvorrichtung zwei Rotationsbewegungen. Die erste Rotationsbewegung entsteht aufgrund der Rotation des Flügels um die Drehachse der Antriebsvorrichtung. Die zweite Rotationsbewegung wird durch den Pitch-Mechanismus bewirkt, der den Flügel um die Flügel-Lagerungsachse schwenkt. Durch den geometrischen Aufbau des Pitch-Mechanismus ergeben sich höher harmonische Anteile in der zweitgenannten Rotationsbewegung, der Pitch-Bewegung, sowie weiterführend durch die Überlagerung mit der erstgenannten Rotationsbewegung höher harmonische Anteile in den Belastungen des Flügels.

Diese höher harmonischen Anteile stellen ungewollte Schwingungen in den Belastungen dar, die über die Kopplungsvorrichtung auf die Offset-Vorrichtung bzw. deren exzentrische Lagerungsachse übertragen werden können. Dadurch wird die Stabilität der Offset-Vorrichtung und deren exzentrischer Lagerungsachse beeinträchtigt.

Vorzugsweise ist der Ankopplungspunkt auf der der Drehachse der Antriebsvorrichtung zugewandten Seite der Tangentialebene an die Kreisbahn positioniert.

Es ist vorteilhaft, wenn der Ankopplungspunkt derart von der Tangentialebene der Kreisbahn in Richtung Drehachse der Antriebsvorrichtung verschoben positioniert ist, dass der bestimmte, nicht-verschwindende Winkel in einem Bereich zwischen 5° und 15°, vorzugsweise in einem Bereich zwischen 8° und 12°, besonders bevorzugt in einem Bereich zwischen 9,5° und 10,5° liegt.

Dadurch, dass der bestimmte, nicht-verschwindende Winkel derart eingestellt ist, dass die Ebene, die die Flügel-Lagerungsachse und den Ankopplungspunkt umfasst, und die Ebene, die die Drehachse der Antriebsvorrichtung und die Verbindungsstrecke von dem Ankopplungspunkt zur Drehachse umfasst, einen Winkel von nahezu 90° einschließen, wenn der Offset-Abstand auf Null eingestellt wird, heben sich alle geraden höher harmonischen Anteile der Pitch-Bewegung bei der Rotation der Antriebsvorrichtung um ihre Drehachse nahezu auf. Damit werden die Belastungen an der Offset-Vorrichtung durch die geraden höher harmonischen Anteile der Pitch-Bewegung ebenfalls minimiert.

Es ist zweckmäßig, den bestimmten, nicht-verschwindenden Winkel in Abhängigkeit des Verhältnisses der zwei nachfolgenden Größen festzulegen. Erstens: Abstand der Flügel-Lagerungsachse zum Ankopplungspunkt; zweitens: Abstand der Drehachse der Antriebsvorrichtung zur Flügel-Lagerungsachse; jeweils unter der Voraussetzung dass der Offset-Abstand auf Null eingestellt wird. Bevorzugt nimmt der bestimmte, nicht-verschwindende und in Radiant angegebene Winkel einen Wert ein, der im Bereich von 75% bis 125% des vorstehend genannten Verhältnisses der ersten zur zweiten Größe liegt; besonders bevorzugt nimmt der bestimmte, nicht-verschwindende Winkel einen Wert ein, der im Bereich von 90 % bis 110 % des genannten Verhältnisses liegt.

Weiter ist es von besonderem Vorteil, wenn der bestimmte, nicht-verschwindende Winkel derart eingestellt ist, dass die Ebene, die die Flügel-Lagerungsachse und den Ankopplungspunkt umfasst, und die Ebene, die die Drehachse der Antriebsvorrichtung und die Verbindungsstrecke von dem Ankopplungspunkt zur Drehachse umfasst, einen Winkel von nahezu 90° einschließen, wenn der Offset-Abstand auf Null eingestellt wird. In diesem Fall heben sich alle geraden höher harmonischen Anteile der Pitch-Bewegung bei der Rotation der Antriebsvorrichtung um ihre Drehachse nahezu auf. Damit werden die Belastungen an der Offset-Vorrichtung durch die geraden höher harmonischen Anteile der Pitch-Bewegung ebenfalls minimiert.

Der Ankopplungspunkt der Kopplungsvorrichtung an den Flügel liegt außerhalb des Flügelprofils. Dies hat den Vorteil, dass der Flügel als solcher durch die Ankopplung der Kopplungsvorrichtung nicht beeinträchtigt wird. Vorteilhafterweise wird damit die Stabilität des Flügels nicht negativ beeinträchtigt.

Bevorzugt kommen Flügel mit einem Profil zum Einsatz, das symmetrisch bezüglich der Profilsehne ist. Die Erfindung ist aber nicht auf solche symmetrischen Profile beschränkt.

Es ist von Vorteil, wenn die Flügel-Lagerungsachse bezüglich der Ebene, die durch den Massenschwerpunkt des Flügels und parallel sowohl zur Drehachse als auch zur Profilsehne des Flügels verläuft, zur Drehachse der Antriebsvorrichtung hin um einen bestimmten Abstand verschoben ist.

Die Verschiebung der Flügel-Lagerungsachse in Richtung der Drehachse um einen bestimmten Abstand bezüglich der Ebene, die durch den Massenschwerpunkt des Flügels und parallel sowohl zur Drehachse als auch zur Profilsehne des Flügels verläuft, hat den Vorteil, dass die Gleichkraft an der Offset-Vorrichtung bzw. an der exzentrischen Lagerungsachse, die durch die Offset-Vorrichtung definiert wird, minimiert wird. Bei der Gleichkraft an der Offset-Vorrichtung handelt es sich um den Mittelwert der gesamten auf die Offset-Vorrichtung wirkenden Kraft im Laufe einer vollständigen Rotorumdrehung. Wird die auf die Offset-Vorrichtung bzw. exzentrische Lagerungsachse wirkende Kraft in eine Fourier-Reihe entwickelt, so handelt es sich bei der Gleichkraft um den Term nullter Ordnung. Damit wird die Belastung an der Offset-Vorrichtung bzw. an der exzentrischen Lagerungsachse weiter reduziert. Auf die Offset-Vorrichtung bzw. exzentrische Lagerungsachse werden auch Belastungen ausgeübt aufgrund von Drehmomenten, die an dem Flügel angreifen. Wie vorstehend bereits erläutert, führt der Flügel bei Betrieb der Antriebsvorrichtung zwei miteinander gekoppelte Rotationsbewegungen aus. Die erste Rotationsbewegung stammt von der Drehung des Flügels entlang der Kreisbahn um die Drehachse der Antriebsvorrichtung. Die zweite Rotationsbewegung entspricht der Pitch-Bewegung des Flügels um die Flügel-Lagerungsachse. Bezogen auf die Flügel-Lagerungsachse ergeben sich zwei Beiträge zum Drehmoment, das auf den Flügel wirkt. Der erste Beitrag ist mit der Rotationsbewegung des Flügels entlang der Kreisbahn um die Drehachse der Antriebsvorrichtung verbunden. Diese Rotationsbewegung bewirkt eine Zentrifugalkraft auf den Flügel. Ein entsprechendes Drehmoment entsteht daher immer dann, wenn der Flügel abseits seines Schwerpunkts gelagert ist. Der zweite Betrag ist mit der Pitch-Bewegung des Flügels um seine Flügel-Lagerungsachse verbunden. Das entsprechende Drehmoment hängt einerseits von dem Massenträgheitsmoment des Flügels und andererseits von der (Winkel-)Beschleunigung des Flügels ab, die dieser bei der Pitch-Bewegung erfährt.

Beide genannten Beiträge zum Drehmoment weisen eine Abhängigkeit von dem Abstand des Flügel-Lagerungspunkts bzw. der Flügel-Lagerungsachse vom Massenschwerpunkt auf. Durch Variation dieses Abstands kann daher das resultierende Drehmoment minimiert werden.

Das resultierende Drehmoment bewirkt diverse Kräfte, wie Zug- und/oder Druckkräfte, in der Kopplungsvorrichtung. Diese Kräfte werden über die Kopplungsvorrichtung an die Offset-Vorrichtung übertragen. Durch die erfindungsgemäße Positionierung des Flügel-Lagerungspunkts bzw. der Flügel-Lagerungsachse kann somit die Gleichkraft an der Offset-Vorrichtung bzw. der exzentrischen Lagerungsachse minimiert werden.

Bevorzugt weist der Flügel eine derart inhomogene Massenverteilung auf, dass dadurch die Verschiebung um den bestimmten Abstand bewirkt wird. Eine einfache Realisierung dieser inhomogenen Massenverteilung besteht darin, auf der der Drehachse abgewandten Flügeloberseite die Massendichte zu erhöhen, z.B. durch Auftragen von zusätzlichen Gewichten oder einer entsprechenden Beschichtung auf der Flügeloberseite. Damit wird der Massenschwerpunkt des Flügels bezüglich der Drehachse des Rotors in radialer Richtung weiter nach außen verlagert. Dies ist gleichbedeutend damit, dass die Flügel-Lagerungsachse bezüglich des Massenschwerpunkts sich näher in radialer Richtung an der Drehachse der Antriebsvorrichtung befindet als der Massenschwerpunkt. Bei ansonsten gleichbleibender Flügelgeometrie kann damit der erfindungsgemäße Effekt bewirkt werden.

Es ist vorteilhaft, wenn die Flügel-Lagerungsachse in einem Bereich positioniert ist, der einerseits durch die Ebene, die senkrecht auf der Profilsehne steht und durch den Massenschwerpunkt verläuft, und andererseits durch die Ebene, die senkrecht auf der Profilsehne steht und durch die Profilnase verläuft, beschränkt ist. Dadurch ist es möglich, ausschließlich Zugkräfte in der Kopplungsvorrichtung zu erhalten, was wiederum eine stark vereinfachte Konstruktion dieser ermöglicht.

Vorzugsweise verläuft die Flügel-Lagerungsachse außerhalb des Flügelprofils. Dies hat den Vorteil, dass die Stabilität des Flügels durch die Lagerungsvorrichtung nicht beeinträchtigt wird.

Es ist vorteilhaft, wenn die erfindungsgemäße Antriebsvorrichtung des Weiteren eine Scheibe umfasst, die derart ausgestaltet ist, dass sie den oder die Flügel aerodynamisch von den restlichen Komponenten der Antriebsvorrichtung trennt. Eine solche Scheibe ist besonders vorteilhaft für den Fall, dass die Antriebsvorrichtung mit höheren Drehzahlen betrieben wird.

Bevorzugt weist die Antriebsvorrichtung weiter ein Verbindungselement auf, wobei das Verbindungselement, in dem Punkt, in dem der Flügel durch die Lagerungsvorrichtung schwenkbar gelagert ist, starr mit dem Flügel, und im Ankopplungspunkt des Flügels beweglich mit der Kopplungsvorrichtung verbunden ist. Das Verbindungselement umfasst besonders bevorzugt einen Hebelarm. Dies ermöglicht die starre Verbindung des Hebelarms mit dem Flügel. Das Verbindungselement ist bevorzugt ein eigenes Bauteil zur Ankopplung der Kopplungsvorrichtung am Flügel. Besonders bevorzugt ist der Hebelarm von außen mit dem Flügel verbunden. Die Pitch-Bewegung wird damit über die Lagerungsvorrichtung in den Flügel eingeleitet. Der Vorteil ist, dass der Ankopplungspunkt der Kopplungsvorrichtung außerhalb des Flügelprofils gewählt werden kann. An dem Flügel selbst ist eine Stelle für Lagerung und Einleitung der Pitch-Bewegung ausreichend. Besonders bevorzugt befindet sich der Flügel-Lagerungspunkt an der Stelle des Flügels mit der größten Profildicke. Dies hat den Vorteil, dass die auftretenden Kräfte besser im Flügel verteilt werden können. Daraus resultiert auch eine verbesserte Bauweise und eine Gewichtsreduktion des Flügels und/oder des Pitch-Mechanismus und/oder der Antriebsvorrichtung.

Speziell bei einer Antriebsvorrichtung, die eine Scheibe umfasst, die derart ausgestaltet ist, dass sie den oder die Flügel aerodynamisch von den restlichen Komponenten der Antriebsvorrichtung trennt, hat ein Verbindungselement den weiteren Vorteil, dass in der Scheibe keine Ausnehmung für die Kopplungsvorrichtung im Ankopplungspunkt vorgesehen werden muss. Denn in diesem Fall kann der Ankopplungspunkt derart gewählt werden, dass er nicht mit der Scheibe in Kontakt kommt.

Es ist vorteilhaft, wenn die Offset-Vorrichtung eine Offset-Scheibe umfasst, durch deren Mittelpunkt die exzentrische Lagerungsachse verläuft, und die um die exzentrische Lagerungsachse drehbar gelagert ist, und wobei der Anbindungspunkt auf der Offset-Scheibe außerhalb deren Mittelpunkt angeordnet ist. Bei mehreren vorhandenen Flügeln umfasst die Offset-Scheibe für jeden Flügel einen entsprechenden Anbindungspunkt. Die Anbindungspunkte sind gleichmäßig über den Umfang der Offset-Scheibe verteilt. Anstelle einer Offset-Scheibe ist es auch möglich, einen sog. Offset-Pin, also einen Offset-Stift, zu verwenden. Im Falle von mehreren Flügeln wird jeder Flügel an denselben Offset-Pin gekoppelt. Die Kopplungsvorrichtungen der einzelnen Flügel werden daher übereinander an den Offset-Pin gekoppelt. Dadurch vergrößert sich bei Verwendung eines Offset-Pins, im Vergleich zur Verwendung einer Offset-Scheibe, die axiale Ausdehnung der Antriebsvorrichtung.

Bevorzugt umfasst die Kopplungsvorrichtung ein Pleuel, der die Offset-Vorrichtung mit dem Ankopplungspunkt des Flügels verbindet. Ein Pleuel bzw. eine Pleuelstange stellt eine konstruktiv besonders geeignete Umsetzung der erfindungsgemäßen Kopplungsvorrichtung dar. Vorzugsweise ist ein Endstück des Pleuels drehbar an der Offset-Vorrichtung angekoppelt.

Bevorzugt umfasst die erfindungsgemäße Antriebsvorrichtung weitere Flügel, besonders bevorzugt zwei, drei, vier, fünf oder sechs Flügel, mit jeweils zugehörigem Pitch-Mechanismus, wobei alle Flügel und Pitch-Mechanismen der Antriebsvorrichtung gleichartig sind, und wobei die Flügel der Antriebsvorrichtung gleichmäßig entlang der Kreisbahn um die Drehachse der Antriebsvorrichtung verteilt sind. Die Antriebsvorrichtung für ein Fluggerät weist daher bevorzugt eine Mehrzahl von Flügeln auf, die gleichmäßig entlang einer Kreisbahn um eine Drehachse der Antriebsvorrichtung verteilt sind, und von denen jeder entlang der Kreisbahn um die Drehachse der Antriebsvorrichtung drehbar ist. Darüber hinaus weist die bevorzugte Antriebsvorrichtung eine Mehrzahl von Pitch-Mechanismen mit je einer Kopplungsvorrichtung und einer Lagerungsvorrichtung auf. Jeder Flügel ist durch die entsprechende Lagerungsvorrichtung um eine entsprechende Flügel-Lagerungsachse parallel zur Drehachse der Antriebsvorrichtung schwenkbar gelagert. Des Weiteren weist die bevorzugte Antriebsvorrichtung eine Offset-Vorrichtung auf, an die jeder Flügel durch die entsprechende Kopplungsvorrichtung in einem entsprechenden Anbindungspunkt angekoppelt ist. Die Offset-Vorrichtung definiert eine exzentrische Lagerungsachse, die in einem einstellbaren Offset-Abstand parallel zur Drehachse der Antriebsvorrichtung gelagert ist, sodass die Kopplungsvorrichtungen die zugehörigen Flügel derart an die Offset-Vorrichtung koppeln, dass die Rotation der Flügel entlang der Kreisbahn um die Drehachse der Antriebsvorrichtung eine Pitch-Bewegung der Flügel bewirkt, wenn der Offset-Abstand auf einen Wert ungleich Null eingestellt ist. Erfindungsgemäß ist entweder jede Kopplungsvorrichtung an den entsprechenden Flügel in einem jeweiligen Ankopplungspunkt angekoppelt, wobei jeder der Ankopplungspunkte jeweils derart positioniert ist, dass die Ebene, die die entsprechende Flügel-Lagerungsachse und den entsprechenden Ankopplungspunkt umfasst, und die entsprechende Tangentialebene an die Kreisbahn durch die zugehörige Flügel-Lagerungsachse jeweils einen bestimmten, nicht-verschwindenden Winkel einschließen, wenn der Offset-Abstand auf Null eingestellt wird. Und/oder die Flügel-Lagerungsachse eines jeden Flügels ist bezüglich der Ebene, die durch den jeweiligen Massenschwerpunkt des Flügels und parallel sowohl zur Drehachse der Antriebsvorrichtung als auch zur Profilsehne des jeweiligen Flügels verläuft, jeweils zur Drehachse der Antriebsvorrichtung hin um einen bestimmten Abstand verschoben ist.

Bei einer Mehrzahl von Flügeln bedeutet im Zusammenhang mit der Erfindung eine gleichmäßige Verteilung entlang der Kreisbahn um die Drehachse der Antriebsvorrichtung, dass die Flügel-Lagerungspunkte bzw. Flügel-Lagerungsachsen der Flügel etwa auf der Kreisbahn liegen, und die Flügel-Lagerungspunkte bzw. Flügel-Lagerungsachsen zweier benachbarter Flügel jeweils nahezu denselben Abstand zueinander haben.

Die Verwendung einer Mehrzahl von Flügeln hat den Vorteil, dass eine größere Schubkraft der Antriebsvorrichtung erzeugt werden kann. Darüber hinaus ermöglicht die gleichmäßige Verteilung der Flügel entlang der Kreisbahn eine zumindest teilweise Aufhebung der an der Offset-Vorrichtung bzw. exzentrischen Lagerungsachse wirkenden Kräfte. Auf die Antriebsvorrichtung mit einer Mehrzahl von Flügeln können die vorteilhaften Ausgestaltungen der Erfindung entsprechend angewandt werden. Die daraus resultierenden Vorteile entsprechen denen, die im Zusammenhang mit der Erfindung beschrieben wurden.

Es ist ein besonderer Vorteil, wenn die Antriebsvorrichtung insgesamt fünf Flügel umfasst. Berechnungen zeigen, dass erfindungsgemäße Antriebsvorrichtungen mit unterschiedlicher Anzahl an Flügeln unterschiedlich auf harmonische Anteile in den Kräften, die von den entsprechenden Kopplungsvorrichtungen auf die Offset-Vorrichtung bzw. exzentrische Lagerungsachse übertragen werden, reagieren. Es treten höher harmonische Anteile auf, die letztlich die Offset-Vorrichtung belasten. Im Falle von insgesamt fünf Flügeln sind die höher harmonischen Anteile stark unterdrückt. Diese Unterdrückung wird insbesondere durch die erfindungsgemäße Positionierung des Ankopplungspunkts der Kopplungsvorrichtung an den Flügel, und/oder durch die erfindungsgemäße Positionierung der Flügel-Lagerungsachse besonders intensiviert.

Bevorzugt ist die Antriebsvorrichtung ein Cyclogyro-Rotor. Die Erfindung ist allerdings nicht auf den Einsatz in Cyclogyros beschränkt. Es ist auch möglich, die erfindungsgemäße Antriebsvorrichtung z.B. in sog. Micro Air Vehicles (MAVs), d.h. unbemannten Drohnen von geringer Größe, oder in bemannten Fluggeräten einzusetzen. Darüber hinaus ist es auch möglich, die erfindungsgemäße Antriebsvorrichtungen im Zusammenhang mit anderen Fluiden als Luft, wie etwa Flüssigkeiten, einzusetzen.

Im Folgenden werden bevorzugte Ausführungsbeispiele der vorliegenden Erfindung anhand der nachfolgenden Figuren beschrieben. Es zeigen:

Figur 1: eine perspektivische Ansicht eines Fluggeräts mit mehreren erfindungsgemäßen Antriebsvorrichtungen;

Figur 2: eine perspektivische Ansicht einer erfindungsgemäßen Antriebsvorrichtung;

Figur 3: eine Profilansicht eines an eine Offset-Vorrichtung gekoppelten Pitch-Mechanismus gemäß dem ersten Ausführungsbeispiel der Erfindung zur Definition des bestimmten, nicht-verschwindenden Winkels;

Figur 4: eine Profilansicht eines mit einer Kopplungsvorrichtung an eine Offset-Vorrichtung gekoppelten Flügels gemäß dem ersten Ausführungsbeispiel der Erfindung;

Figur 5a: eine Prinzipdarstellung der Funktionsweise der erfindungsgemäßen Ankopplung der Kopplungsvorrichtung an einem Ankopplungspunkt des Flügels;

Figur 5b: eine Profilansicht eines mit einer Kopplungsvorrichtung an eine Offset-Vorrichtung gekoppelten Flügels mit Ankopplungspunkt in einer optimalen Position zur Reduzierung der Belastungen an der Offset-Vorrichtung bzw. exzentrischen Lagerungsachse gewählt;

Figur 5c: eine erfindungsgemäße Antriebsvorrichtung in Profilansicht an einem Rotor mit vier Flügeln, wobei der Ankopplungspunkt bei allen Flügeln optimal positioniert ist;

Figur 6: eine Parameterstudie zum Einfluss der Position des Ankopplungspunkts des Flügels auf die Belastungen an der Offset-Vorrichtung;

Figur 7a: eine erste konstruktive Variante der ersten Ausführungsform unter Verwendung eines Verbindungselements zur Umsetzung der erfindungsgemäßen Positionierung des Ankopplungspunkts;

Figur 7b: eine zweite konstruktive Variante der ersten Ausführungsform unter Verwendung einer Anbindung an den Flügel zur Umsetzung der erfindungsgemäßen Positionierung des Ankopplungspunkts;

Figur 8: eine Profilansicht eines mit einer Kopplungsvorrichtung an eine Offset-Vorrichtung gekoppelten Flügels;

Figur 9: eine Parameterstudie zum Einfluss des Abstands des Flügel-Lagerungspunkts vom Massenschwerpunkt auf die Kräfte an der Offset-Vorrichtung;

Figur 10: eine Tabelle, die Belastungen an der Offset-Vorrichtung aufgrund von harmonischen Schwingungen in Abhängigkeit der Flügelanzahl angibt.

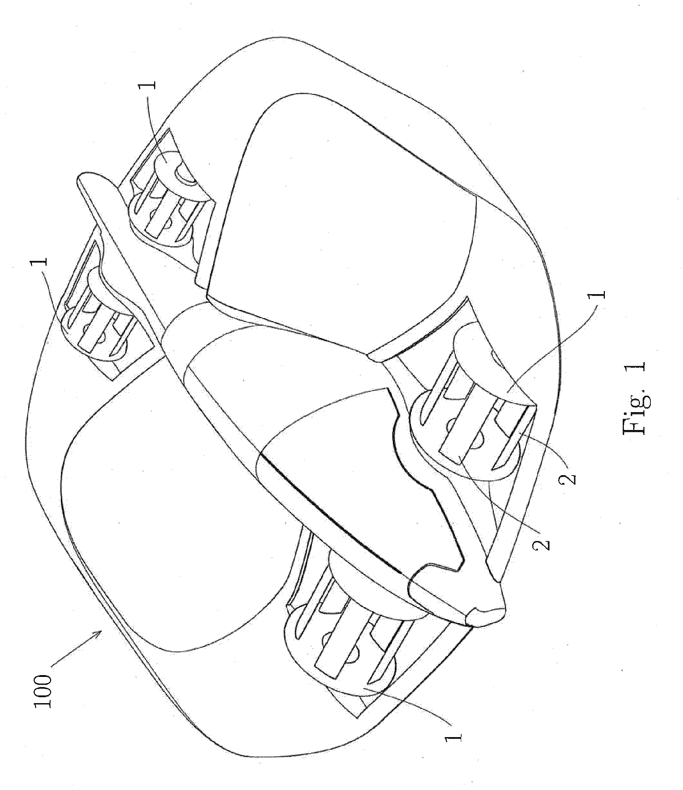

Figur 1 zeigt eine perspektivische Ansicht eines Fluggeräts 100 mit mehreren erfindungsgemäßen Antriebsvorrichtungen 1. Das gezeigte Fluggerät 100 weist vier Antriebsvorrichtungen 1 auf. Bei den gezeigten Antriebsvorrichtungen 1 handelt es sich um Cyclogyro-Rotoren. Das in Fig. 1 gezeigte Fluggerät 100 kann daher auch als Cyclogyro bezeichnet werden. Die Antriebsvorrichtungen werden im Zusammenhang mit den nachfolgenden Figuren näher beschrieben. Jede diese Antriebsvorrichtungen 1 ist um eine Drehachse drehbar gelagert. Jede Antriebsvorrichtung 1 umfasst mehrere Flügel 2, die um ihre Längsachse schwenkbar gelagert sind. Damit kann der Neigungswinkel der Flügel 2 während der Rotation der Antriebsvorrichtung 1 variiert werden. Durch die Steuerung der Rotationsgeschwindigkeit der Antriebsvorrichtungen 1 sowie der Steuerung der Neigungswinkel der Flügel 2 können der Betrag sowie die Richtung des erzeugten Schubs variiert werden. Das Fluggerät 100 weist an der Vorderseite zwei größere Antriebsvorrichtungen 1 auf. An der Rücksichte weist das Fluggerät 100 zwei kleinere Antriebsvorrichtungen 1 auf.

Bei dem dargestellten Fluggerät 100 kann es sich beispielsweise um ein Luftfahrzeug, ein bemanntes Fluggerät, eine Drohne oder um sog. Micro Air Vehicles (MAVs) handeln.

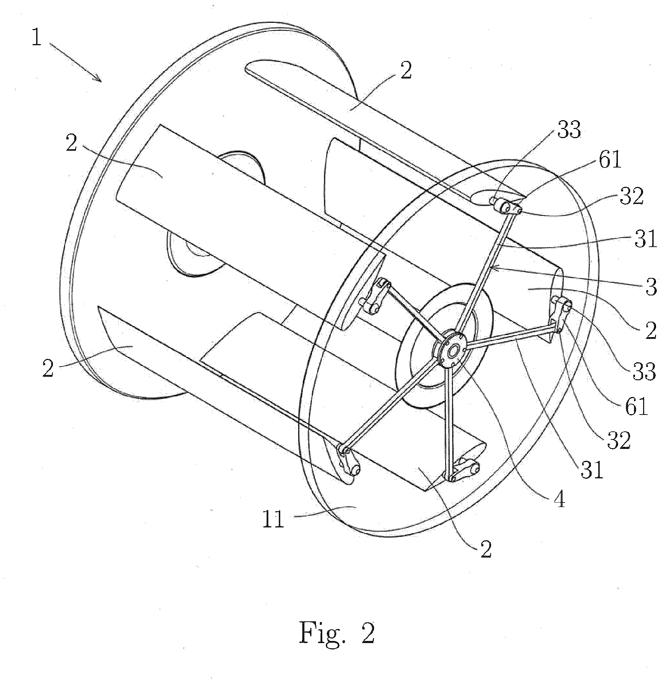

In Figur 2 ist eine erfindungsgemäße Antriebsvorrichtung 1 perspektivisch dargestellt. Diese Antriebsvorrichtung 1 umfasst fünf Flügel 2, jeweils einen zugehörigen Pitch-Mechanismus 3, eine Offset-Vorrichtung 4 und eine Scheibe 11. Die Flügel 2 sind drehbar um eine Drehachse der Antriebsvorrichtung 1 gelagert. Die Offset-Vorrichtung 4 definiert eine exzentrische Lagerungsachse, die exzentrisch bezüglich der Drehachse der Antriebsvorrichtung 1 gelagert ist. In Fig. 2 ist die Offset-Vorrichtung als Offset-Scheibe (englisch "offset disk") dargestellt. Die Offset-Scheibe ist frei drehbar um die exzentrische Lagerungsachse gelagert. Die exzentrische Lagerung der Offset-Scheibe 4 impliziert eine exzentrische Lagerung des Pitch-Mechanismus 3. Durch die exzentrische Lagerung des Pitch-Mechanismus 3 wird eine Veränderung der Stellung der Flügel 2 während einer Umdrehung um die Drehachse der Antriebsvorrichtung 1 bewirkt. Jeder der dargestellten Pitch-Mechanismen 3 umfasst eine Kopplungsvorrichtung 31 und eine Lagerungsvorrichtung 33. Jeder Flügel 2 ist durch die entsprechende Lagerungsvorrichtung 33 schwenkbar gelagert. Der Flügel 2 ist um eine Achse parallel zur Drehachse der Antriebsvorrichtung 1 gelagert. Diese Achse ist die Flügel-Lagerungsachse 33. Die Lagerung des Flügels 2 kann beispielsweise mithilfe eines Lagerungsmittels, wie einem oder mehreren Stiften, sog. Hauptstift (englisch "main pin") erfolgen. Das Lagerungsmittel ist bevorzugt ein Teil der Lagerungsvorrichtung 33. Die Flügel-Lagerungsachse 33 kann durch den Massenschwerpunkt des Flügels 2 verlaufen. Bevorzugt erfolgt jedoch eine Lagerung des Flügels 2 in einem Abstand vom Massenschwerpunkt. Die Kopplungsvorrichtung 31 des Pitch-Mechanismus 3 koppelt den Flügel 2 derart an die Offset-Vorrichtung 4, dass der Flügel 2 eine Pitch-Bewegung ausführt, wenn er sich um die Drehachse der Antriebsvorrichtung 1 dreht, und unter der Voraussetzung, dass die exzentrische Lagerungsachse nicht mit der Drehachse der Antriebsvorrichtung 1 übereinfällt. Ein Endstück der Kopplungsvorrichtung 31 ist in einem Anbindungspunkt an die Offset-Vorrichtung 4 gekoppelt. Das andere Endstück der Kopplungsvorrichtung 31 ist an den Flügel 2 gekoppelt.

Die Offset-Scheibe 4 ist frei drehbar gelagert. Die Drehachse der Offset-Scheibe 4 verläuft vorzugsweise in einem bestimmten Offset-Abstand parallel zur Drehachse der Antriebsvorrichtung 1. Dadurch kommt die exzentrische Lagerung der Offset-Scheibe 4 bez. der Drehachse der Antriebsvorrichtung 1 zustande. Dieser Offset-Abstand kann einstellbar sein. Eine Offset-Vorrichtung 4 mit einstellbarer Exzentrizität kann beispielsweise durch ein Planentengetriebe realisiert werden. Eine Pitch-Bewegung der Flügel 2 ergibt sich dann, wenn der Offset-Abstand nicht Null beträgt.

Die Ankopplung der Kopplungsvorrichtung 31 an den Flügel 2 erfolgt in einem Ankopplungspunkt 32. Dazu kann die Kopplungsvorrichtung 31, ein Kopplungsmittel umfassen. Bei der in Fig. 2 gezeigten Antriebsvorrichtung 1 umfasst die Kopplungsvorrichtung 31 ein Pleuel (englisch "conrod") sowie einen Stift, sog. Pitch-link-Stift. Bei dem Stift handelt es sich um eine konstruktive Ausgestaltung des erfindungsgemäßen Kopplungsmittels. In dem in Fig. 2 gezeigten Ausführungsbeispiel erfolgt die Ankopplung der Kopplungsvorrichtung 31 an den Flügel 2 im Ankopplungspunkt 32 nicht durch direkte Verbindung mit dem Flügel 2, sondern indem ein Verbindungselement 61 verwendet wird. Ein Ende des Verbindungselements 61 ist dabei starr mit dem Flügel 2 verbunden, Diese Anbindung erfolgt bevorzugt im Flügel-Lagerungspunkt. Das andere Ende des Verbindungselements 61 ist an die Kopplungsvorrichtung / Pleuel 31 gekoppelt. In diesem Fall wird die Pitch-Bewegung über das Kopplungsmittel mit Hilfe des Pleuels 31 indirekt über das Verbindungselement 61 in den Flügel 2 eingeleitet.

Eine direkte Ankopplung der Kopplungsvorrichtung 31 an den Flügel 2 ist erfindungsgemäß jedoch auch möglich.

Dadurch, dass die Kopplungsvorrichtung 31 des Pitch-Mechanismus exzentrisch bezüglich der Drehachse der Antriebsvorrichtung 1 gelagert ist, bewegt sich der Ankopplungspunkt 32 relativ zur Flügel-Lagerungsachse 33 auf einem Kreisbogen, wenn der Flügel 2 um die Drehachse der Antriebsvorrichtung 1 rotiert. Dadurch kommt die Pitch-Bewegung des Flügels 2 zustande. Dabei handelt es sich also um eine Pendelbewegung des Flügels 2 um die Flügel-Lagerungsachse 33.

Des Weiteren umfasst die in Fig. 2 gezeigte Antriebsvorrichtung 1 eine Scheibe 11. Diese Scheibe 11 ist derart ausgestaltet, dass sie die Flügel 2 aerodynamisch von den restlichen Komponenten der Antriebsvorrichtung 1 trennt. Eine solche Scheibe 11 ist besonders vorteilhaft für den Fall, dass die Antriebsvorrichtung 1 mit höheren Drehzahlen betrieben wird.

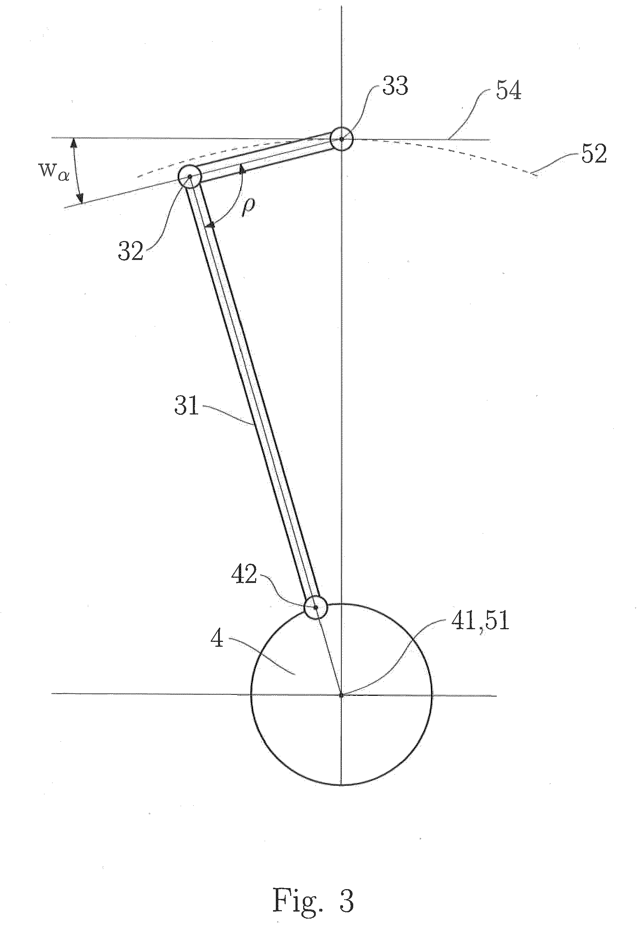

In einer erfindungsgemäßen Ausführungsform ist die Kopplungsvorrichtung 31 an den Flügel 2 in einem Ankopplungspunkt 32 angekoppelt, der derart positioniert ist, dass die Ebene, die die Flügel-Lagerungsachse 33 und den Ankopplungspunkt 32 umfasst, und die Tangentialebene an die Kreisbahn durch die Flügel-Lagerungsachse 33 einen bestimmten, nicht-verschwindenden Winkel einschließen, wenn der Offset-Abstand auf Null eingestellt wird. Die in Fig. 2 gezeigten Flügel 2 weisen ein symmetrisches Profil auf. Eine detaillierte Beschreibung der erfindungsgemäßen Kopplungsvorrichtung 31 findet sich insbesondere im Zusammenhang mit Fig. 3.

Die Antriebsvorrichtung 1 erzeugt Schub aufgrund zweier miteinander gekoppelter Drehbewegungen. Die erste Drehbewegung ist die Rotation der Flügel 2 um die Drehachse der Antriebsvorrichtung 1. Diese erste Drehbewegung führt zu einer Bewegung der Flügel 2 entlang einer Kreisbahn um die Drehachse der Antriebsvorrichtung. Speziell bewegen sich die Flügel-Lagerungsachsen 33 bzw. Flügel-Lagerungspunkte entlang der Kreisbahn. Jede Flügel-Lagerungsachse 33 ist parallel zur Längsachse der Flügel 2. Die Längsachse der Flügel 2 ist parallel zur Drehachse der Antriebsvorrichtung 1. Damit ist die Längsachse der Flügel 2 auch parallel zur Flügel-Lagerungsachse 33. Die Schubrichtung der Antriebsvorrichtung 1 liegt normal zur Drehachse der Antriebsvorrichtung 1. Für eine optimale Schuberzeugung sollen alle Flügel 2 zu jedem Zeitpunkt bestmöglich zur Strömungsrichtung ausgerichtet sein. Damit wird sichergestellt, dass jeder Flügel 2 einen maximalen Beitrag zum gesamten Schub leistet. Während der Drehung der Antriebsvorrichtung 1 um ihre Drehachse wird aufgrund des vorstehend beschriebenen Pitch-Mechanismus die Neigung jedes Flügels 2 laufend geändert. Jeder Flügel 2 vollzieht eine periodische Änderung des Neigungswinkels bzw. eine Pendelbewegung. Dies ist die Pitch-Bewegung. Dabei bewegt sich der Ankopplungspunkt 32 auf einem Kreisbogen um die Flügel-Lagerungsachse 33. Dies ist die zweite Drehbewegung.

Der Betrag und die Richtung des erzeugten Schubs hängen von der Neigung der Flügel 2 ab. Daher beeinflusst der Abstand der exzentrischen Lagerung der Offset-Vorrichtung 4 bzw. des Pitch-Mechanismus 3 zur Drehachse der Antriebsvorrichtung 1 den Betrag des erzeugten Schubs. Durch die Verschiebung der exzentrischen Lagerung der Offset-Vorrichtung 4 in Umfangsrichtung, also bei konstantem Abstand zur Drehachse der Antriebsvorrichtung 1, wird die Richtung des erzeugten Schubs geändert.

Obwohl in Fig. 2 Pitch-Mechanismen 3 nur auf einer Seite der Antriebsvorrichtung 1 gezeigt sind, kann es aus Stabilitätsgründen zweckmäßig sein, auch auf der gegenüberliegenden Seite der Antriebsvorrichtung entsprechende Pitch-Mechanismen anzubringen.

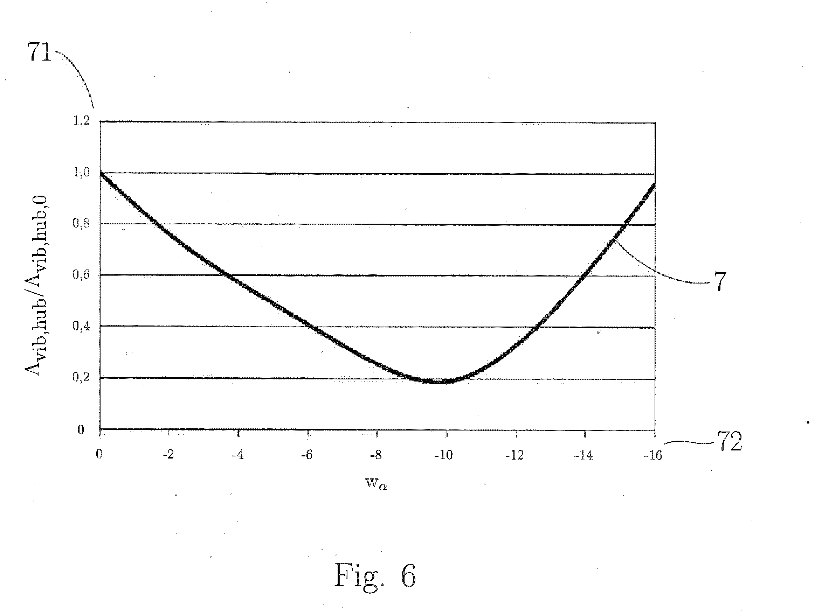

Figur 3 zeigt einen Teil einer erfindungsgemäßen Antriebsvorrichtung in Profilansicht. In Fig. 3 zu sehen ist ein Pitch-Mechanismus und eine Offset-Vorrichtung 4. Der Pitch-Mechanismus umfasst eine Kopplungsvorrichtung 31 und eine Lagerungsvorrichtung 33. Darüber hinaus ist ein Teil der Kreisbahn 52 angedeutet, entlang der sich der die Flügel-Lagerungsachse 33 bewegt. Auch gezeigt ist die Tangente 54 an die besagte Kreisbahn. Die Erfindung kommt gänzlich ohne die spezielle Geometrie eines Flügels aus. Daher ist in Fig. 3 kein spezielles Flügelprofil eingezeichnet. Erfindungsgemäß kommt es nur auf die Positionierung des Ankopplungspunkts 32 bezüglich der Tangente 54 an. Genauer, erfindungsgemäß entscheidend ist der Winkel $w_\alpha$, der von der Tangente 54 und der Verbindungsgeraden durch den Flügel-Lagerungspunkt 33 und den Ankopplungspunkt 32 eingeschlossen wird. Der Winkel $w_\alpha$ wird in der Konfiguration der Offset-Vorrichtung bestimmt, in der keine Exzentrizität vorhanden ist, d.h., wenn der Offset-Abstand auf Null eingestellt wird, wie in Fig. 3 gezeigt. Dies ist gleichbedeutend damit, dass die Drehachse 51 der Antriebsvorrichtung mit der exzentrischen Lagerungsachse 41 übereinfällt. Der erfindungsgemäße Effekt, also die Reduzierung von Belastungen an der Offset-Vorrichtung 4 bzw. and der exzentrischen Lagerungsachse 41 tritt dann auf, wenn der Winkel $w_\alpha$ einen nicht-verschwirindenden Wert annimmt. Dies wird unten im Zusammenhang mit Fig. 6 gezeigt. Anstelle des Winkels $w_\alpha$ kann es zweckmäßig sein, den Winkel $\rho$ zu betrachten, der einerseits von der Verbindungsstrecke Flügel-Lagerungsachse 33 zu Ankopplungspunkt 32, und andererseits von der Verbindungsstrecke vom Ankopplungspunkt 32 zur Drehachse 51 eingeschlossen wird.

Anzumerken ist, dass in Fig. 3 eine sog. Offset-Scheibe dargestellt ist. Die Kopplungsvorrichtung 31 ist in einem Anbindungspunkt 42 der Offset-Scheibe angekoppelt, der von der Lagerungsachse 41 der Offset-Scheibe einen bestimmten Abstand hat. Dadurch, dass die Offset-Scheibe drehbar gelagert ist, führt dies aber noch nicht zu einer Pitch-Bewegung. Erst wenn die Lagerungsachse 41 der Offset-Scheibe 4 gegenüber der Drehachse 51 der Antriebsvorrichtung radial um einen Offset-Abstand verschoben wird, tritt die Pitch-Bewegung auf.

Schließlich ist zu bemerken, dass in Fig. 3 der Teil der erfindungsgemäßen Antriebsvorrichtung als Querschnitt im Profil gezeigt ist. Bei Berücksichtigung der Ausdehnung der Antriebsvorrichtung in die dritte, nicht dargestellte, Dimension, müssen bei der Definition von $w_\alpha$ anstelle von Geraden ggf. Ebenen betrachtet werden. In allgemeiner Form gilt: der Ankopplungspunkt 32 ist derart positioniert, dass die Ebene, die die Flügel-Lagerungsachse 33 und den Ankopplungspunkt 32 umfasst, und die Tangentialebene 54 an die Kreisbahn 52 durch die Flügel-Lagerungsachse 33 einen bestimmten, nicht-verschwindenden Winkel $w_\alpha$ einschließen, wenn der Offset-Abstand auf Null eingestellt wird.

Wenn nachfolgend vereinfachend auf zweidimensionale Größen Bezug genommen wird, so ist damit impliziert, dass diese ggf. für entsprechende dreidimensionale Größen stellvertretend genannt sind.

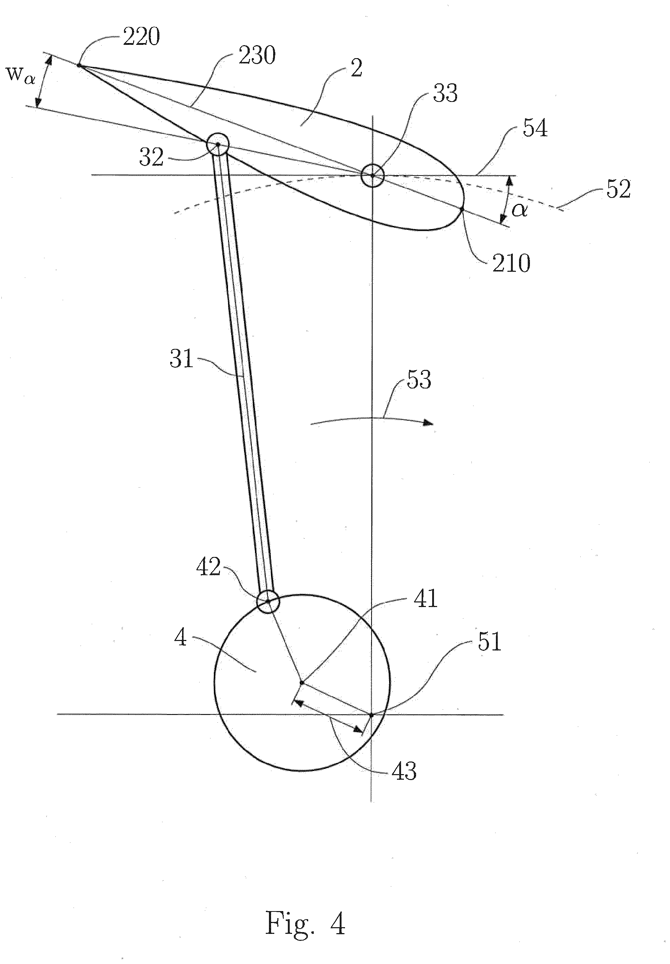

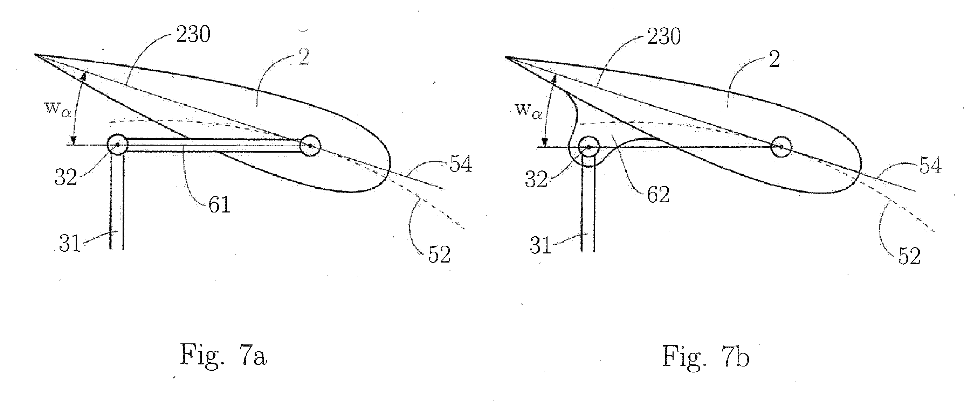

Figur 4 zeigt einen Teil einer erfindungsgemäßen Antriebsvorrichtung in Profilansicht. In Fig. 4 zu sehen ist ein Flügel 2, ein Pitch-Mechanismus und eine Offset-Vorrichtung 4. Der Pitch-Mechanismus umfasst eine Kopplungsvorrichtung 31 und eine Lagerungsvorrichtung 33. Der einfacheren Darstellung wegen wird hier ein Flügel 2 mit symmetrischem Profil betrachtet. Der Flügel 2 ist mithilfe der Lagerungsvorrichtung 33 um die Flügel-Lagerungsachse 33 schwenkbar gelagert. Die Kopplungsvorrichtung 31 ist in dem Ankopplungspunkt 32 an den Flügel 2 gekoppelt. Der Ankopplungspunkt 32 ist derart positioniert, dass die Ebene, die die Flügel-Lagerungsachse 33 und den Ankopplungspunkt 32 umfasst, und die Tangentialebene 54 an die Kreisbahn durch die Flügel-Lagerungsachse 33 einen bestimmten, nicht-verschwindenden Winkel $w_\alpha$ einschließen. Der Winkel $w_\alpha$ wird in der Konfiguration der Offset-Vorrichtung bestimmt, in der keine Exzentrizität vorhanden ist, d.h., wenn der Offset-Abstand 43 auf Null eingestellt wird. Die Profilsehne 230 ist als die Verbindung zwischen Profilnase 210 und Profilhinterkante 220 des Flügels definiert. Die Definition von $w_\alpha$ wurde bereits oben im Zusammenhang mit Fig. 3 beschrieben. Die gezeigte Kopplungsvorrichtung 31 ist mit einem Ende direkt in dem Ankopplungspunkt 32 an den Flügel gekoppelt. Das heißt, die Kopplungsvorrichtung 31 ist, beispielsweise unter Verwendung eines Kopplungsmittels wie etwa eines Stifts, direkt mit dem Flügel 2 beweglich verbunden. Eine indirekte Ankopplung der Kopplungsvorrichtung 31 an den Flügel 2 ist auch möglich; dies wird weiter unten im Zusammenhang mit Fig. 7a beschrieben.

Der Flügel 2 kann um eine Kreisbahn 52 entlang der Drehachse 51 der Antriebsvorrichtung rotieren. Die Rotationsrichtung ist durch den Pfeil 53 angedeutet; es wird also davon ausgegangen, dass der Flügel im Uhrzeigersinn rotiert. Bei der gezeigten Offset-Vorrichtung 4 handelt es sich um eine Offset-Scheibe. Diese ist drehbar um eine exzentrische Lagerungsachse 41 gelagert. Bevorzugt kann die Offset-Vorrichtung 4 frei um diese exzentrische Lagerungsachse 41 rotieren. Die exzentrische Lagerungsachse 41 der Offset-Vorrichtung 4 ist bezüglich der Drehachse 51 der Antriebsvorrichtung um einen Abstand 43 parallel verschoben. Durch diesen seitlichen Versatz 43 ist die Offset-Vorrichtung 4 exzentrisch bezüglich der Drehachse 51 gelagert. Im Ankopplungspunkt 42 der Offset-Scheibe 4 ist die Kopplungsvorrichtung 31 an die Offset-Scheibe 4 gekoppelt.

Die Profilsehne 230 des in Fig. 4 gezeigten Flügels 2 ist bezüglich der Tangente 54 in dem Flügel-Lagerungspunkt 33 an die Kreisbahn 52, die der Flügel-Lagerungspunkt 33 bei der Rotation um die Drehachse 51 beschreibt, um den Winkel $\alpha$ geneigt. Dies ist der sog. Pitch-Winkel. Die Pitch-Bewegung kommt aufgrund der exzentrischen Lagerung der exzentrischen Lagerungsachse 41 der Offset-Vorrichtung 4 gegenüber der Drehachse 51 der Antriebsvorrichtung zustande. Figur 4 zeigt, dass aufgrund der exzentrischen Lagerung der Offset-Vorrichtung 4 auch der Ankopplungspunkt 42 der Kopplungsvorrichtung 31 des Pitch-Mechanismus eine bezüglich der Drehachse 51 exzentrische Bahn entlangläuft. Dies hat zur Folge, dass sich der radiale Abstand des Ankopplungspunkts 42 während der Rotation des Flügels 2 im Verhältnis zur Kreisbahn 52, auf der sich die Flügel-Lagerungsachse 33 entlangbewegt, verändert. Damit verändert sich auch die Position des Ankopplungspunkts 32 relativ zu dieser Kreisbahn 52. Dies bewirkt, dass der Flügel 2 eine Pitch-Bewegung α ausführt. In anderen Worten, der Flügel 2 hebt und senkt sich bezüglich der Kreisbahn 52. In noch anderen Worten, der Flügel 2 vollführt eine Pendelbewegung um die Kreisbahn 52 während er sich entlang der Kreisbahn 52 bewegt. Diese Pendelbewegung bzw. das Anheben und Absenken des Flügels 2 wird durch den Winkel α angegeben. Dies ist der sog. Pitch-Winkel. Der Winkel α gibt den Winkel an, der von der Tangente 54 in dem Flügel-Lagerungspunkt 33 an die Kreisbahn 52 und der Profilsehne 230 eingeschlossen ist. Es ist vorteilhaft, die maximale Amplitude der Pitch-Bewegung derart zu wählen, dass der Winkel α in einem Bereich zwischen - 50° und + 50° variieren kann. Derartige Winkel sind speziell für Cyclogyro-Rotoren von Vorteil, um einen relevanten Schub zu erzeugen.

Der Ankopplungspunkt 32 bewegt sich bei der Pitch-Bewegung a auf einem Kreisbogen um die Flügel-Lagerungsachse 33. Diese Bewegung führt dazu, dass der Flügel 2 bei seiner Bewegung entlang der Kreisbahn 52 um die Drehachse 51 eine Pendelbewegung ausführt, die neben -einer grundharmonischen Schwingung noch höher harmonische Anteile aufweist. Diese höher harmonischen Anteile sind umso stärker ausgeprägt, je größer der Pitch-Winkel α wird. Bei dem vorstehend genannten Winkelbereich von - 50° bis + 50° sind die höher harmonischen Anteile nicht mehr zu vernachlässigen.

Durch die erfindungsgemäße Positionierung des Ankopplungspunkts 32 ist eine Möglichkeit gegeben, die genannten höher harmonischen Anteile zu beeinflussen.

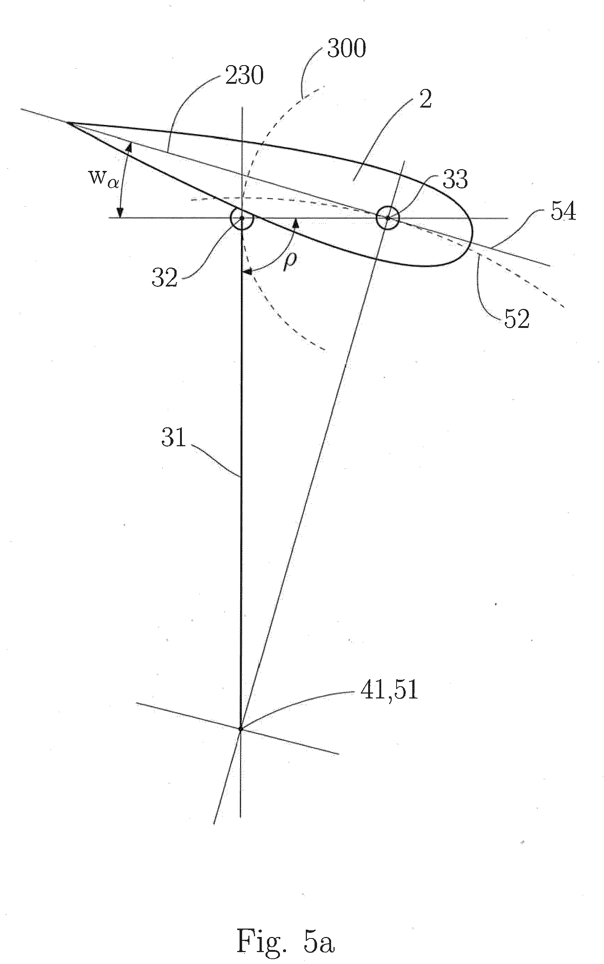

Figur 5a zeigt schematisch, wie die erfindungsgemäße Positionierung des Ankopplungspunkts 32 zur Beeinflussung und Reduzierung der höher harmonischen Anteile der Pitch-Bewegung führt. In Fig. 5a ist dazu der Pitch-Mechanismus für den Fall gezeigt, dass die Drehachse 51 der Antriebsvorrichtung mit der exzentrischen Lagerungsachse 41 der Offset-Vorrichtung übereinstimmt. In anderen Worten, die Exzentrizität der exzentrischen Lagerungsachse 41 bezüglich der Drehachse 51 ist null. In noch anderen Worten, in dem gezeigten Fall tritt keine Pitch-Bewegung auf. In genau dieser Konfiguration wird der Winkel $w_\alpha$ erfindungsgemäß definiert und bestimmt. Eine Pitch-Bewegung, die durch die Kopplungsvorrichtung 31 durch Ankopplung im Kopplungspunkt 32 in den Flügel 2 eingeleitet wird, tritt erst auf, wenn die exzentrische Lagerungsachse 41 der Offset-Vorrichtung wieder um einen gewissen Abstand von der Drehachse 51 der Antriebsvorrichtung versetzt wird. In diesem Fall bewegt sich der Ankopplungspunkt 32 entlang eines Kreisbogens 300 um die Flügel-Lagerungsachse 33.

Bei geeigneter Wahl des Winkels $w_\alpha$ ist der Winkel ρ, der zwischen der Verbindung des Flügel-Lagerungspunkts 33 und mit dem Ankopplungspunkt 32, einerseits, und der Verbindung des Ankopplungspunkts 32 mit der Drehachse 51 der Antriebsvorrichtung bzw. der exzentrischen Lagerungsachse 41 der Offset-Vorrichtung, andererseits, liegt, ein rechter Winkel.

Wird der Winkel $w_\alpha$ derart gewählt, dass der Winkel ρ, der von der Verbindungsstrecke zwischen dem Flügel-Lagerungspunkt 33 und dem Ankopplungspunkt 32, einerseits, und der Verbindungsstrecke zwischen Ankopplungspunkt 32 und der Drehachse 51 der Antriebsvorrichtung, andererseits, eingeschlossen wird, 90° beträgt, ergibt sich, dass die geometrische Abweichung des Kreisbogens 300 von der Tangente an den Kreisbogen 300 im Ankopplungspunkt 32 symmetrisch verteilt ist. Das heißt, durch die Wahl eines rechten Winkels, wie vorstehend beschrieben, wird eine Symmetrisierung der Bewegung des Ankopplungspunkts 32 bezüglich der Tangente an den Kreisbogen 300 bewirkt. Dies ist gleichbedeutend damit, dass es keine geraden höher harmonischen Anteile in der Pitch-Bewegung gibt. Alle geraden höher harmonischen Anteile der Pitch-Bewegung können daher mithilfe des Winkels $w_\alpha$ minimiert werden.

Die höher harmonischen Anteile der Pitch-Bewegung führen zu Kräften in der Kopplungsvorrichtung 31. Durch die Kopplungsvorrichtung 31 werden diese Kräfte auf die Offset-Vorrichtung bzw. die exzentrische Lagerungsachse 41 übertragen. Dadurch kommt es zu Belastungen an der Offset-Vorrichtung. Dadurch, dass die geraden höher harmonischen Anteile der Pitch-Bewegung durch eine erfindungsgemäße Positionierung des Ankopplungspunkts 32 minimiert werden, werden auch die entsprechenden Belastungen an der Offset-Vorrichtung bzw. an der exzentrischen Lagerungsachse 41 minimiert.

Obwohl die optimale Position des Ankopplungspunkts 32 dann gegeben ist, wenn der Winkel ρ, der von der Verbindungsstrecke zwischen dem Flügel-Lagerungspunkt 33 und dem Ankopplungspunkt 32, einerseits, und der Verbindungsstrecke zwischen Ankopplungspunkt 32 und der Drehachse 51 der Antriebsvorrichtung, andererseits, eingeschlossen wird, 90° beträgt, tritt eine Reduzierung der Belastungen an der Offset-Vorrichtung auch bei anderen Winkeln $w_\alpha$ auf, die nicht notwendig zu einem rechten Winkel ρ führen. Entsprechende Modellrechnungen werden im Hinblick auf Fig. 6 beschrieben.

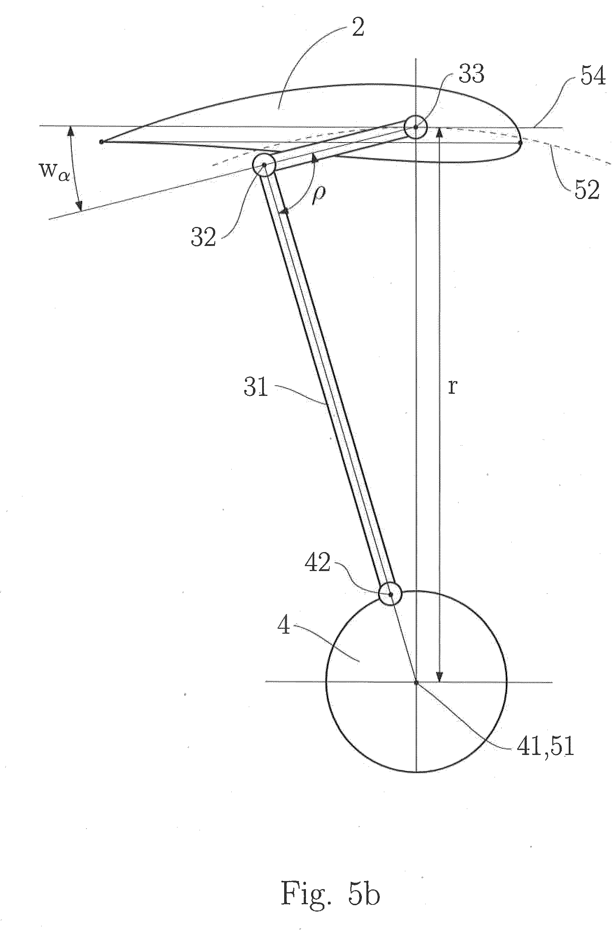

Figur 5b zeigt einen Ausschnitt aus einer erfindungsgemäßen Antriebsvorrichtung im Profil, wobei der Ankopplungspunkt 32 optimal positioniert ist. Das heißt, in der gezeigten Konfiguration werden die geraden höher harmonischen Anteile der Pitch-Bewegung bestmöglich reduziert. Figur 5b zeigt den allgemeinen Fall mit einem asymmetrischen Flügelprofil. Der Winkel ρ, der von der Verbindungsstrecke zwischen dem Flügel-Lagerungspunkt 33 und dem Ankopplungspunkt 32, einerseits, und der Verbindungsstrecke zwischen Ankopplungspunkt 32 und der Drehachse 51 der Antriebsvorrichtung, andererseits, eingeschlossen wird, beträgt 90°. Wie vorstehend im Zusammenhang mit Fig. 5a beschrieben, erfolgt die Positionierung des Ankopplungspunkts 32 und damit die Einstellung des Winkels ρ unter der Voraussetzung verschwindender Exzentrizität, d.h. die exzentrische Lagerungsachse 41 der Offset-Vorrichtung 4 fällt mit der Drehachse 51 der Antriebsvorrichtung zusammen.

Aufgrund der endlichen Ausmaße der Offset-Vorrichtung 4 fällt der Anbindungspunkt 42 der Kopplungsvorrichtung 31 an die Offset-Vorrichtung 4 nicht identisch mit der exzentrischen Lagerungsachse 41 der Offset-Vorrichtung 4 zusammen. Der Radius r der Kreisbahn 52, entlang der sich der Flügel 2 bei der Rotation um die Drehachse 51 bewegt, ist regelmäßig deutlich größer als der Abstand des Anbindungspunkts 42 von der exzentrischen Lagerungsachse 41. Daher ist es auch möglich, den Winkel p, der von der Verbindungsstrecke zwischen dem Flügel-Lagerungspunkt 33 und dem Ankopplungspunkt 32, einerseits, und der Verbindungsstrecke zwischen Ankopplungspunkt 32 und Anbindungspunkt 42 de Offset-Vorrichtung 4, andererseits, zu optimieren, d.h. auf nahezu 90° einzustellen, ohne Einbußen in der Reduzierung der Belastungen an der Offset-Vorrichtung 4 zu erleiden.

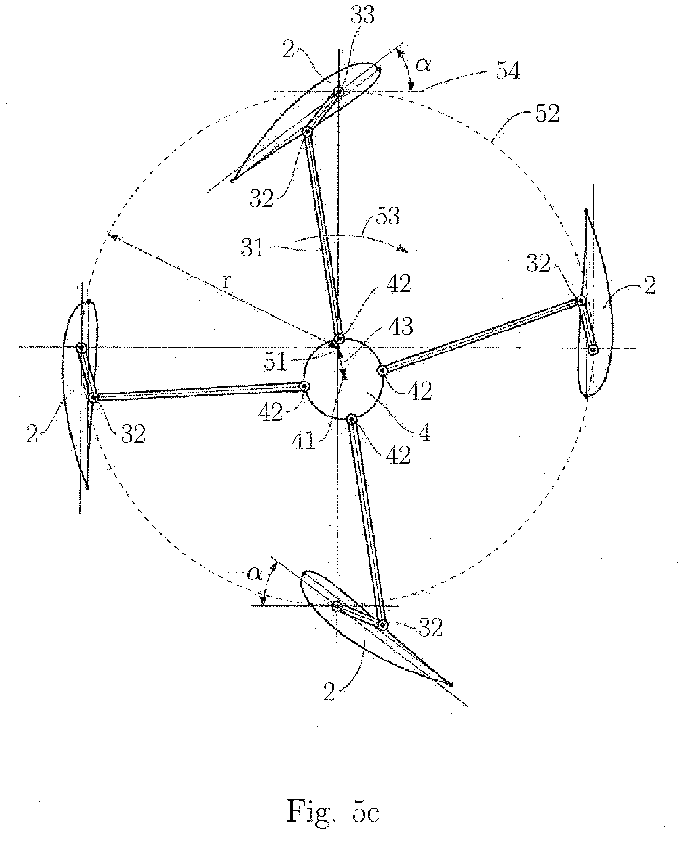

Figur 5c zeigt eine erfindungsgemäße Antriebsvorrichtung in Profilansicht an einem Rotor mit vier Flügeln 2. Jeder der Flügel 2 kann sich auf einer Kreisbahn 52 mit Radius r um die Drehachse 51 der Antriebsvorrichtung bewegen. Jeder Flügel 2 ist an einem Ankopplungspunkt 42 an die Offset-Vorrichtung 4 gekoppelt. In dem gezeigten Beispiel rotieren die Flügel 2 im Uhrzeigersinn, wie durch den Pfeil 53 angedeutet. In Fig. 5c ist die Antriebsvorrichtung mit nicht verschwindender Exzentrizität gezeigt, d.h. die exzentrische Lagerungsachse 41 ist um einen nicht-verschwindenden Offset-Abstand 43 von der Drehachse 51 verschoben. Wie bereits weiter oben ausgeführt, ergibt sich dadurch eine Pitch-Bewegung $\alpha$ der Flügel 2. Der Ankopplungspunkt 32 eines jeden Flügels 2 ist optimal positioniert worden. Das heißt, wie insbesondere im Hinblick auf Figuren 3, 5a und 5b beschrieben, wurde der Winkel, der von der Verbindungsgeraden durch den Flügel-Lagerungspunkt 33 und den Ankopplungspunkt 32 sowie von der Kopplungsvorrichtung 31 eingeschlossen wird, auf nahezu 90 eingestellt. Dieser Winkel wurde in der Konfiguration der Offset-Vorrichtung 4 bestimmt, in der keine Exzentrizität vorhanden ist, d.h., wenn der Offset-Abstand auf Null eingestellt wurde.

Obwohl es für die Erzielung des erfindungsgemäßen Effekts - wie oben bereits ausgeführt - nicht auf die spezielle Geometrie, Lagerung oder das spezielle Profil der Flügel 2 ankommt (entscheidend ist die relative Anordnung von Flügel-Lagerungspunkt 33, Ankopplungspunkt 32 und Kopplungsvorrichtung 31 bei verschwindendem. Offset-Abstand 43), wird in dem in Fig. 5c gezeigten Ausführungsbeispiel davon ausgegangen, dass die Profilsehnen der Flügel 2 bei Offset-Abstand Null keine Verdrehung gegenüber der Tangente 54 an die Kreisbahn 52 aufgewiesen haben. Bei dieser Anfangskonfiguration kann das Zustandekommen der Minimierung der geraden harmonischen Anteil der Pitch-Bewegung besonders gut veranschaulicht werden. Denn bei dem dargestellten Rotor mit vier Flügeln 2 mit einer optimalen Positionierung des Ankopplungspunktes 32 zeigt sich die Minimierung der geraden harmonischen Anteile der Pitch-Bewegung dahingehend, dass die gegenüberliegenden Flügel 2 jeweils den negativen Pitch-Winkel $\alpha$ bzw. - $\alpha$ des anderen aufweisen. In der dargestellten Position befindet sich der oberste Flügel an seiner maximalen positiven Auslenkung $\alpha$, der unterste Flügel in seiner maximalen negativen Auslenkung - $\alpha$. Die beiden anderen Flügel befinden sich in Mittelstellung bei einer Auslenkung von Null Grad.

Der Vollständigkeit halber wird erwähnt, dass aufgrund der Tatsache, dass die geraden höher harmonischen Anteile unter realen Einsatzbedingungen nur minimiert werden und nicht gänzlich verschwinden, der gegenüberliegende Flügel jeweils nur näherungsweise den negativen Auslenkungs-Wert des anderen aufweist.

Figur 6 zeigt einen Graphen 7, der den Spitze-Spitze-Wert (englisch "peak-to peak value") der Belastung an der Offset-Vorrichtung, $A_{vib,hub}$, normiert auf den Spitze-Spitze-Wert der Belastungen an der Offset-Vorrichtung für $w_\alpha$ = 0, $A_{vib,hub,o}$, als Funktion des Winkels $w_\alpha$ angibt. Der Spitze-Spitze-Wert beschreibt den Unterschied zwischen dem minimalen und maximalen Wert der Belastung an der Offset-Vorrichtung und ist somit ein direktes Maß für die Schwingung der Belastung an der Offset-Vorrichtung. Die Ordinate 71 gibt den Funktionswert $A_{vib,hub}/A_{vib,hub,0}$ an, die Abszisse 72 den Winkel $w_\alpha$ gemessen in Grad.

Die Belastungen an der Offset-Vorrichtung bzw. an der exzentrischen Lagerungsachse in Abhängigkeit des Winkels $w_\alpha$ wurde unter Verwendung einer weiterführenden Berechnung aller Kräfte und Momente und zusätzlicher Berücksichtigung aerodynamischer Belastungen berechnet. Die Reduktion der Belastungen an der Offset-Vorrichtung ist deutlich zu erkennen. Insbesondere ergibt sich aus dem Verlauf des Graphen 7, dass eine Reduktion der Belastungen an der Offset-Vorrichtung auftritt, sobald der Ankopplungspunkt erfindungsgemäß positioniert wird. Im Betrieb muss zu jedem Zeitpunkt der Winkel zwischen einer Kopplungsvorrichtung und der Verbindungslinie zwischen Ankopplungspunkt und Flügel-Lagerungspunkt ausreichend spitz sein. Ansonsten würde eine Selbsthemmung eintreten und die Funktion des Pitch-Mechanismus wäre nicht mehr gegeben. Erfahrungsgemäß ist, in Hinblick auf einem maximalen Pitch-Winkel von 50°, die Verdrehung $w_\alpha$ auf maximal 20° begrenzt. Das heißt, eine Verbesserung gegenüber der Ankopplung der Kopplungsvorrichtung auf der Tangente an die Kreisbahn (betrachtet für den Fall, dass keine Exzentrizität vorhanden ist) tritt erfindungsgemäß unter realistischen Einsatzbedingungen stets auf.

Aus Fig. 6 kann abgelesen werden, dass das Minimum der Belastung an der Offset-Vorrichtung bei einem Winkel $w_\alpha$ von etwa 10° auftritt. Unter Berücksichtigung der der Modellrechnung zugrunde gelegten Geometrie entspricht dies tatsächlich nahezu einem rechten Winkel zwischen der Verbindungsstrecke von Flügel-Lagerungspunkt zu Ankopplungspunkt, einerseits, und der Verbindungsstrecke von Ankopplungspunkt zur Drehachse der Antriebsvorrichtung, andererseits.

Figuren 7a und 7b zeigen zwei erfindungsgemäße Varianten zur Ankopplung der Kopplungsvorrichtung 31 an den Flügel 2. In beiden Figuren 7a und 7b sind symmetrische Flügelprofile gezeigt. Es wird davon ausgegangen, dass der Offset-Abstand auf Null eingestellt ist.

In Fig. 7a ist eine indirekte Ankopplung der Kopplungsvorrichtung 31 an den Flügel 2 gezeigt. Das heißt, der Ankopplungspunkt 32 befindet sich nicht direkt am Flügel 2. Der gezeigte Ankopplungspunkt 32 befindet sich außerhalb des Flügelprofils. Die Ankopplung erfolgt über ein Verbindungselement 61. Bei dem Verbindungselement 61 kann es sich um einen Hebelarm handeln. Das Verbindungselement 61 ist mit einem Ende starr mit dem Flügel 2 verbunden. Gezeigt ist, dass das Verbindungselement 61 mithilfe der Lagerungsvorrichtung 33, vorzugsweise mit einem Lagerungsmittel wie einem Stift, dem sog. Hauptstift, mit dem Flügel 2 verbunden ist. Das andere Ende des Verbindungselements 61 ist mit der Kopplungsvorrichtung 31 in dem Ankopplungspunkt 32 beweglich verbunden. Der Ankopplungspunkt 32 befindet sich um einen Winkel $w_\alpha$ von der Tangente 54 entfernt.

Durch die Verwendung des Verbindungselements 61 als separates Bauteil zur Ankopplung der Kopplungsvorrichtung 31 am Flügel 2 wird nur ein Lagerungsmittel, wie etwa ein Hauptstift benötigt. Das heißt, die Stabilität des Flügels 2 wird nur an einer Stelle durch die Lagerungsvorrichtung 33 beeinträchtigt; eine zweite Belastung wie etwa zur Befestigung der Kopplungsvorrichtung 31 direkt am Flügel 2 mithilfe eines entsprechenden Kopplungsmittels, wie etwa eines weiteren Stifts, entfällt damit. Dadurch, dass das Verbindungselement 61 außen starr mit der Lagerungsvorrichtung 33 oder dem Lagerungsmittel und damit mit dem Flügel 2 verbunden ist, wird die Pitch-Bewegung über ein Moment in der Lagerungsvorrichtung 33 bzw. im Lagerungsmittel in den Flügel 2 eingeleitet.

Durch die in Fig. 7a gezeigte Variante ergeben sich mehrere Vorteile. Zunächst lässt sich die optimale Positionierung des Ankopplungspunkts 32 der Kopplungsvorrichtung 31 an den Flügel 2 mithilfe des Verbindungsmittels 61 besonders einfach umsetzen. Der Winkel kann einfach durch Verdrehung des Verbindungselements 61 um die Flügel- Lagerungsachse 33 derart eingestellt werden, dass der Winkel p, der von Verbindungselement 61 und Kopplungsvorrichtung / Pleuel 31 eingeschlossen wird, etwa 90° beträgt. Wie im Hinblick auf Figuren 5a und 5b beschrieben, ist damit eine nahezu optimale Position des Ankopplungspunkts 32 bestimmt.

Weiter ist das Gesamtgewicht des Pitch-Mechanismus zusammen mit dem Verbindungsmittel 61 geringer als bei einer herkömmlichen direkten Ankopplung der Kopplungsvorrichtung 31 an den Flügel 2, da das zusätzliche Kopplungsmittel, wie etwa ein zusätzlicher Stift, zur Krafteinleitung entfällt. Darüber hinaus erfolgt die die Krafteinleitung für die Pitch-Bewegung über die Lagerungsvorrichtung 33 bzw. über das Lagerungsmittel und damit regelmäßig an der dicksten Stelle des Flügels 2. Dadurch können die auftretenden Kräfte besser im Flügel 2 verteilt werden. Dies ermöglicht wiederum eine verbesserte Bauweise und eine weitere Gewichtsreduktion der Antriebsvorrichtung.

Schließlich ergibt sich ein weiterer Vorteil bei Antriebsvorrichtungen, die eine Scheibe zur aerodynamischen Trennung der Flügel von den übrigen Komponenten der Antriebsvorrichtung vorsehen, wie sie etwa in Fig. 2 dargestellt ist (dort mit Bezugszeichen 11 bezeichnet). Durch die Ankopplung der Kopplungsvorrichtung 31 an den Flügel 2 mithilfe eines Verbindungselements 61 wird vermieden, dass in der Scheibe eine zusätzliche Ausnehmung für die Anbindung der Kopplungsvorrichtung 31 am Flügel 2 vorgesehen werden muss. Damit wird eine einfachere Bauweise der Scheibe ermöglicht. Darüber hinaus wird die Aerodynamik der Antriebsvorrichtung verbessert.

Figur 7b zeigt eine weitere Variante eines Verbindungselements 62 zur Ankopplung der Kopplungsvorrichtung 31 in einem Kopplungspunkt 32 an den Flügel 2. Der Ankopplungspunkt 32 liegt um Winkel $w_\alpha$ von der Tangente 54 entfernt. Der Ankopplungspunkt 32 befindet sich außerhalb des Flügelprofils. Das Verbindungselement 62 ist an einer von der Lagerungsvorrichtung 33 entfernten Stelle an der Unterseite des Flügels befestigt. Ein Ende der Kopplungsvorrichtung 31 ist im Ankopplungspunkt 32 des Verbindungselement beweglich gelagert.

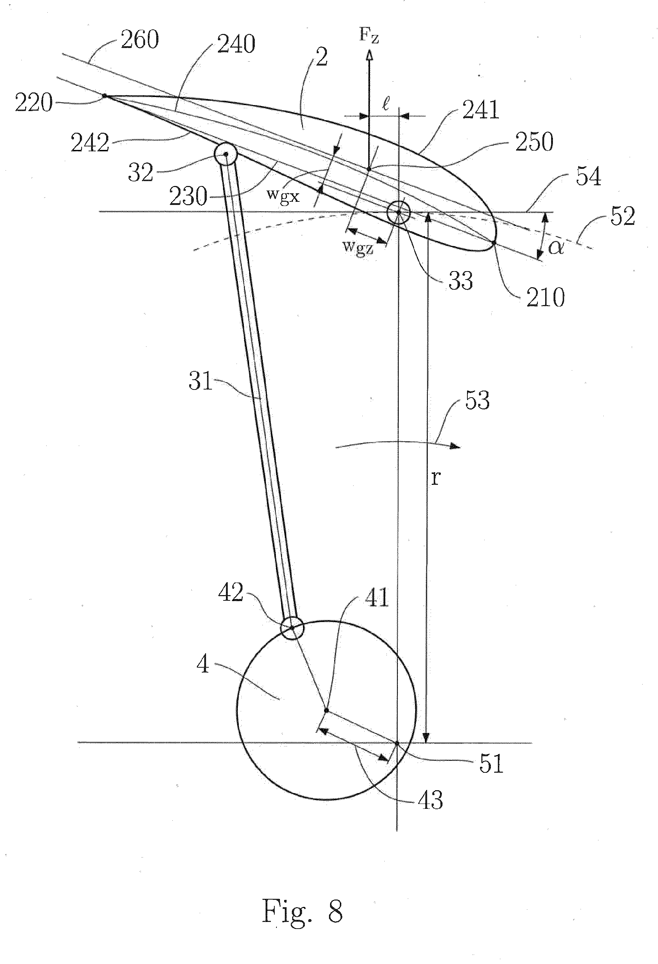

Figur 8 zeigt einen Flügel 2, einen Pitch-Mechanismus und eine Offset-Vorrichtung 4 einer Antriebsvorrichtung. Das Profil des in Fig. 8 gezeigten Flügels 2 ist asymmetrisch. Der in Fig. 8 gezeigte Teil einer erfindungsgemäßen Antriebsvorrichtung unterscheidet sich von dem entsprechenden Teil der in Fig. 4 gezeigten Antriebsvorrichtung dadurch, dass die Flügel-Lagerungsachse 33 in einem bestimmten Abstand $w_{gx}$ von dem Massenschwerpunkt 250 des Flügels 2 angeordnet ist. Genauer: die Flügel-Lagerungsachse 33 ist bezüglich der Ebene 260, die durch den Massenschwerpunkt 250 des Flügels und parallel sowohl zur Drehachse 51 als auch zur Profilsehne 230 des Flügels verläuft, zur Drehachse 51 der Antriebsvorrichtung hin um den Abstand $w_{gx}$ verschoben. Gezeigt ist in Fig. 8 die Antriebsvorrichtung mit einer exzentrischen Lagerungsachse 41, die um einen Offset-Abstand 43 von der Drehachse 51 verschoben ist.

Die Profilsehne 230 ist als die Verbindungslinie zwischen Profilnase 210 und Profilhinterkante 220 des Flügels 2 definiert. Profilnase 210 und Profilhinterkante 220 sind durch die Schnittpunkte der Profilmittellinie 240 mit der Profilkontur gegeben. Die Profilmittellinie 240 ist ihrerseits als die Linie definiert, die aus den Mittelpunkten zwischen der Oberseite 241 und Unterseite 242 des Flügelprofils senkrecht zur Profilsehne 230 besteht.

Die Erzeugung der Pitch-Bewegung $\alpha$ mithilfe des Pitch-Mechanismus, der eine Kopplungsvorrichtung 31 und eine Lagerungsvorrichtung 33 umfasst, erfolgt wie im Zusammenhang mit Fig. 4 beschrieben. Die Flügel-Lagerungsachse 33 rotiert entlang der Kreisbahn 52 im Abstand r von der Drehachse 51 der Antriebsvorrichtung. Auf eine erneute Beschreibung der Bewegung des Ankopplungspunkts 32 der Kopplungsvorrichtung 31 am Flügel 2 und des Ankopplungspunkts 42 der Kopplungsvorrichtung 31 an der Offset-Vorrichtung 4 während der Rotation der Antriebsvorrichtung in Richtung des Pfeils 53 wird daher verzichtet. Alles vorstehend im Zusammenhang mit dem Pitch-Mechanismus Gesagte behält auch für das in Fig. 8 gezeigte Ausführungsbeispiel seine Gültigkeit.

In Fig. 8 ist die Flügel-Lagerungsachse 33 von einer Geraden (bzw. von der entsprechenden Ebene 260, wenn die Ausdehnung der Antriebsvorrichtung in die dritte Dimension berücksichtigt wird), die durch den Massenschwerpunkt 250 des Flügels und parallel zu Profilsehne 230 des Flügels verläuft, um einen Abstand $w_{gx}$ zur Drehachse 51 hin verschoben. Es versteht sich, dass hier die relevanten Größen in Bezug ihre Projektion auf eine Ebene senkrecht zur Drehachse 51 betrachtet wurden. Bei Zugrundelegung der dreidimensionalen Ausdehnung der Antriebsvorrichtung, gilt erfindungsgemäß: Die Flügel-Lagerungsachse 33 ist in Richtung der Drehachse 51 um einen bestimmten Abstand $w_{gx}$ bezüglich der Ebene 260, die durch den Massenschwerpunkt 250 des Flügels und parallel sowohl zur Drehachse 51 als auch zur Profilsehne 230 des Flügels 2 verläuft verschoben. Darüber hinaus ist die Flügel-Lagerungsachse 33 bezüglich der Ebene, die senkrecht auf der Profilsehne 230 steht, und die durch den Massenschwerpunkt 250 verläuft, um den Abstand $w_{gz}$ verschoben. Es stellt sich heraus, dass der Abstand $w_{gz}$ im Wesentlichen den Gleichanteil der Belastungen in der Kopplungsvorrichtung 31 beeinflusst. Im Übrigen hat $w_{gz}$ einen vernachlässigbaren Einfluss auf die Belastungen an der Offset-Vorrichtung 4.

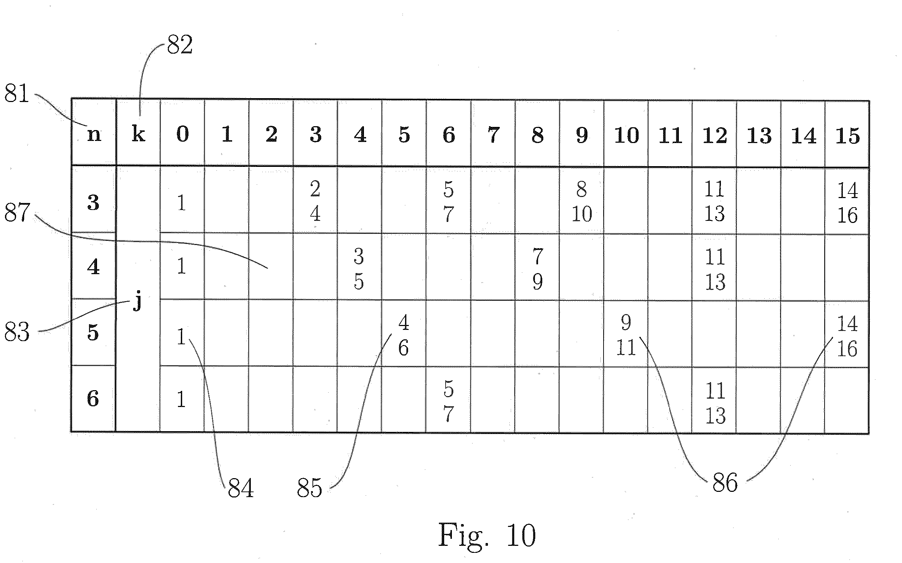

Die Verschiebung $w_{gx}$ der Flügel-Lagerungsachse 33 vom Massenschwerpunkt 250 weg ermöglicht es, die erste harmonische Schwingung des Drehmoments am Flügel 2 zu reduzieren. Dies wird sogleich noch näher beschrieben. Mit der Reduzierung der ersten harmonischen Schwingung ist eine Reduzierung der Gleichkraft an der Offset-Vorrichtung 4 verbunden. Dies wird im Zusammenhang mit Fig. 10 noch näher beschrieben.

Nachfolgend wird der Einfluss des Abstands $w_{gx}$ auf die Belastung an der Offset-Vorrichtung 4 beschrieben. Der Flügel 2 ist um die Flügel-Lagerungsachse 33 bzw. im Flügel-Lagerungspunkt 33 schwenkbar gelagert. Bei der Rotation der Antriebsvorrichtung um die Drehachse 51 vollzieht der Flügel 2 zwei Drehbewegungen. Die erste Drehbewegung ist die Rotation des Flügels 2 entlang der Kreisbahn 52, die zweite ist die Rotation des Flügels 2 um die Flügel-Lagerungsachse 33 aufgrund der Pitch-Bewegung a. Jede dieser Drehbewegungen bewirkt eine entsprechende Kraft bzw. ein entsprechendes Drehmoment auf den Flügel 2. In Folge der Rotation des Flügels 2 um die Drehachse 51 der Antriebsvorrichtung wirkt die Zentrifugalkraft Fz auf den Flügel 2. Diese Zentrifugalkraft Fz greift im Massenschwerpunkt 250 des Flügels 2 an. Wenn M die Masse des Flügels 2 bezeichnet, r den Abstand des Flügel-Lagerungspunkts 33 von der Drehachse 51 angibt und $\omega$ die Winkelgeschwindigkeit der Antriebsvorrichtung angibt, dann ist der Betrag der Zentrifugalkraft $F_Z$ gegeben durch

$$F_Z = M \cdot r \cdot \omega^2.$$

Die Zentrifugalkraft $F_Z$ bewirkt ihrerseits ein Drehmoment $T_Z$ an dem Flügel 2, das den Flügel 2 um die Flügel-Lagerungsachse 33 zu drehen versucht. Dieses Drehmoment $T_Z$ ist gegeben durch

$$T_Z = F_Z \cdot \ell,$$

wobei $\ell$ der Abstand des Massenschwerpunkts 250 von der Flügel-Lagerungsachse 33 ist; das heißt $\ell$ ist gegeben als die Senkrechte von der Flügel-Lagerungsachse 33 auf den im Massenschwerpunkt 250 angreifenden Vektor der Zentrifugalkraft $F_Z$. Der Abstand $\ell$ hängt von dem Pitch-Winkel $\alpha$ des Flügels 2 ab; in anderen Worten, der Abstand $\ell$ ist eine Funktion des Pitch-Winkels a; in noch anderen Worten, der Abstand $\ell$ ist eine Funktion der Pitch-Bewegung $\alpha$. Also: $\ell = \ell(\alpha)$.

Neben dem durch die Zentrifugalkraft $F_Z$ bewirkten Drehmoment $T_Z$ wirkt auf den Flügel 2 noch ein weiteres Drehmoment $T_I$ aufgrund der Pitch-Bewegung $\alpha$ um die Flügel-Lagerungsachse 33. Dieses Drehmoment $T_I$ hängt einerseits von dem Massenträgheitsmoment I des Flügels, bezogen auf die Flügel-Lagerungsachse 33, ab und andererseits von der Winkelbeschleunigung der Pitch-Bewegung $\alpha$; Das Drehmoment $T_I$ ist gegeben als

$$T_I = I \cdot \frac{d^2\alpha}{dt^2},$$

wobei die Winkelbeschleunigung durch die zweite zeitliche Ableitung der Pitch-Bewegung $\alpha$ gegeben ist.

Das gesamte auf den Flügel wirkende Drehmoment T ist damit gegeben durch

$$T = T_Z + T_I = F_Z \cdot \ell(\alpha) + I \cdot \frac{d^2\alpha}{dt^2}.$$

Eine Taylor-Entwicklung des gesamten Drehmoments T in dem Neigungswinkel $\alpha$ bzw. in der Pitch-Bewegung a ergibt, dass bei realistischen Amplituden $\alpha_A$ der Pitch-Bewegung $\alpha$, wie etwa $\alpha_A = 50°$, d.h. $- < \alpha < + 50°$, harmonische Anteile der Pitch-Bewegung, die höher als die grundharmonische Schwingung sind, hinsichtlich der Gleichkraft auf die exzentrische Lagerungsachse 41 im Wesentlichen vernachlässigt werden können. Darüber hinaus ergibt sich aus der Taylor-Entwicklung unter Berücksichtigung der in Fig. 8 gezeigten Geometrie, dass der von der grundharmonischen Schwingung erzeugte Beitrag zum gesamten Drehmoment T auf den Flügel 2 proportional zu dem folgenden Ausdruck R ist:

$$R = w_{gx} \cdot M \cdot r \left(1 - \frac{\alpha_A^2}{8}\right) - \left(I_{cm} + \left(w_{gx}^2 + w_{gz}^2\right) \cdot M\right).$$

Darin bezeichnet $I_{cm}$ das in Bezug auf den Massenschwerpunkt 250 des Flügels berechnete Massenträgheitsmoment, das über den Satz von Steiner aus dem Massenträgheitsmoment I, bezogen auf die Flügel-Lagerungsachse 33, berechnet werden kann. $w_{gz}$ gibt den Abstand des Massenschwerpunkts 250 von einer Geraden, die senkrecht auf der Profilsehne 230 steht und durch den Flügel-Lagerungspunkt 33 verläuft, an. Es stellt sich heraus, dass $w_{gz}$ im Wesentlichen den Gleichanteil des Momentes beeinflusst. Damit kann $w_{gz}$ dazu verwendet werden, um die Gleichanteile in der Kopplungsvorrichtung 31 zu beeinflussen. Diese Kopplungsvorrichtung 31 ist regelmäßig geometriebedingt ein sehr langes Bauteil, bei dem eine Druckbelastung Versagen durch Knicken verursachen kann, was somit einen kritischen Lastfall darstellt. Mit dem Parameter $w_{gz}$ kann nun durch Verschiebung der Gleichanteile eine Vorspannung in Zug-Richtung in der Kopplungsvorrichtung 31 bewirkt werden, sodass im Betrieb keine Druckkräfte in dieser auftreten. Dadurch muss der kritische Lastfall einer Druckbelastung nicht berücksichtigt werden und dieses Bauteil kann wesentlich einfacher gestaltet werden.. $w_{gz}$ hat darüber hinaus keinen wesentlichen Einfluss auf die Belastung der exzentrischen Lagerungsachse 41. Durch die symmetrische Aufteilung mehrerer Kopplungsvorrichtungen 31 entlang der Kreisbahn 52 heben sich die Gleichanteile in den Kopplungsvorrichtungen 31 in der Offset-Vorrichtung 4 auf. Besonders bevorzugt wird $w_{gz}$ so gewählt, dass der Flügel-Lagerungspunkt zwischen Massenschwerpunkt 250 und Profilnase 210 liegt. $w_{gx}$ beeinflusst im Wesentlichen den ersten harmonischen Anteil des Drehmoments am Flügel. Zur Bestimmung dieses ersten harmonischen Anteils kann $w_{gz}$ vernachlässigt werden. Dies liegt daran, dass $w_{gz}$ zwar in der Formel zur Optimierung (Ausdruck R oben) enthalten ist, es aber gegenüber $w_{gx}$ nur einen sehr kleinen Einfluss hat. Dies kann man daran erkennen, dass $w_{gz}$ nur quadratisch in die obige Formel für R eingeht.

Wird dieser Ausdruck R minimiert, d.h. R = 0, so wird auch das Drehmoment T des Flügels minimiert. Der Einfluss, den das Drehmoment T auf den Flügel ausübt, wird über die Kopplungsvorrichtung 31 auf die Offset-Vorrichtung 4 übertragen. Im Zusammenhang mit Fig. 10 wird beschrieben, dass der erste harmonische Anteil des Drehmoments T am Flügel 2 in einer Gleichkraft an der Offset-Vorrichtung 4 resultiert. Das heißt, durch die Variation des Abstands $w_{gx}$ ist es möglich, die Belastungen an der Offset-Vorrichtung 4 aufgrund der Zentrifugalkraft Fz und der Massenträgheit des Flügels 2 zu minimieren.

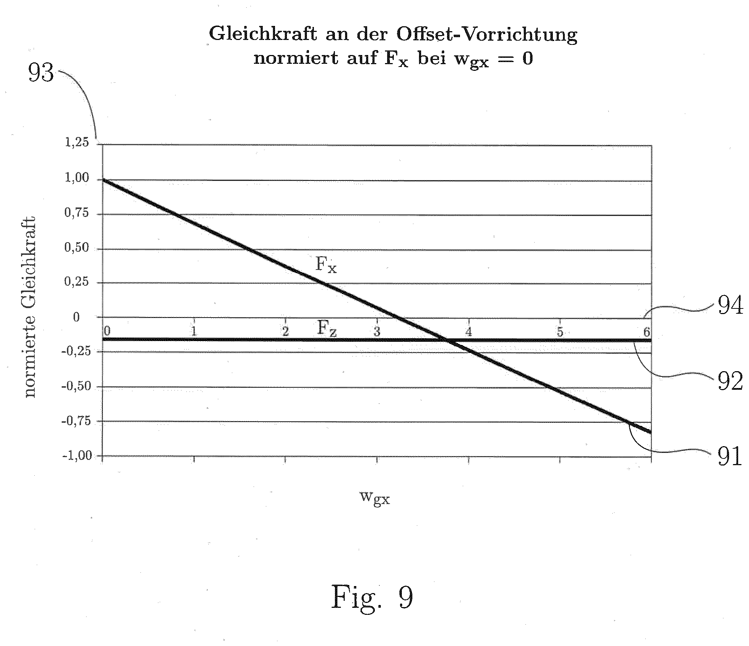

Figur 9 zeigt den Verlauf der zwei Komponenten 91, 92 der Gleichkraft an der exzentrischen Lagerungsachse in x- bzw. z-Richtung (globales Koordinatensystem), beide normiert auf die Kraft $F_x$ bei $w_{gx} = 0$. Dadurch lässt sich auch das Verhältnis zwischen den Komponenten ablesen. Die Ordinate 93 gibt den Funktionswert an, die Abszisse 94 den Abstand $w_{gx}$ gemessen in Zentimetern an.

In dieser Parameterstudie ist die exzentrische Lagerungsachse in positiver x-Richtung ausgelenkt. Dadurch ergibt sich eine wesentliche Gleichkraft bei $w_{gx} = 0$ in x-Richtung. Diese kann nun mit dem Parameter $w_{gx}$ gesenkt werden. Bei idealer Konfiguration kann diese Komponente sogar verschwinden. Vorzugsweise wird $w_{gx}$ so gewählt, dass die Komponente $F_x$ 91 negativ wird. Dadurch ergibt sich eine Stabilisierung des Systems, da die Gleichkraft an der exzentrischen Lagerungsachse der Auslenkung dieser entgegenwirkt. Wird nun der Offset-Abstand erhöht, erhöht sich auch die Gleichkraft, welche eben dieser Auslenkung entgegenwirkt. Hingegen wirkt bei $w_{gx} = 0$ die Komponente $F_x$ 91 in Richtung der Auslenkung. Bei Erhöhung der Auslenkung erhöht sich wiederum auch die Gleichkraft in Richtung der Auslenkung, was einer instabilen Eigenschaft entspricht. Könnte sich beispielsweise die exzentrische Lagerungsachse beim Ausfall der Ansteuerung frei bewegen, würde sich der Rotor bei $w_{gx} = 0$ selbst zerstören, da die Gleichkraft immer in positiver Auslenkungsrichtung wirkt. Ist jedoch die Kraft entgegen der Auslenkung gerichtet, wirkt dies stabilisierend. Die Reduktion der Gleichkraft an der Offset-Vorrichtung ist deutlich zu erkennen. Insbesondere ergibt sich aus dem Verlauf des Graphen $F_x$, dass eine Reduktion der Gleichkraft an der Offset-Vorrichtung auftritt, sobald die Flügel-Lagerungsachse bzw. der Flügel-Lagerungspunkt von dem Massenschwerpunkt des Flügels im Abstand $w_{gx}$ positioniert wird. Das heißt, eine Verbesserung gegenüber der Lagerung des Flügels im Massenschwerpunkt tritt erfindungsgemäß unter Zugrundelegung realistischer Bedingungen stets auf.

Die Gleichkraft an der Offset-Vorrichtung in Abhängigkeit des Abstands $w_{gx}$ wurde unter Verwendung einer weiterführenden Berechnung aller Kräfte und Momente und zusätzlicher Berücksichtigung aerodynamischer Belastungen berechnet.

Aus Fig. 9 kann abgelesen werden, dass der Nulldurchgang von $F_x$ 91 der Gleichkraft an der Offset-Vorrichtung bei einem Abstand $w_{gx}$ von etwa 3,4 mm auftritt. Unter Berücksichtigung der der Modellrechnung zugrunde gelegten Geometrie entspricht dies sehr gut dem Wert, den man durch Minimierung des in Zusammenhang mit Fig. 8 hergeleiteten Ausdrucks R erhält.

Die Ausführungsformen, die insbesondere im Zusammenhang mit Figuren 4-6 beschrieben wurden, erlauben die Minimierung der Beiträge der geraden höher harmonischen Anteile der Schwingungen des Drehmoments am Flügel. Anhand der Überlagerung bei Verwendung mehrerer Flügel ergibt sich so z.B. bei fünf Flügeln eine Minimierung der gesamten Schwingung an der Offset-Vorrichtung, wie noch näher im Zusammenhang mit Fig. 10 gezeigt wird. Die Ausführungsformen, die im Zusammenhang mit Figuren 8 und 9 beschrieben wurden, erlauben die Minimierung der Grundschwingung des Drehmoments am Flügel, und weiter durch die Überlagerung mehrerer Flügel der Gleichkraft an der Offset-Vorrichtung bzw. der exzentrischen Lagerungsachse.

Erfindungsgemäß ist es daher möglich, die Belastungen an der Offset-Vorrichtung der Antriebsvorrichtung erheblich zu reduzieren. Das heißt, durch entsprechende Wahl des Winkels $w_\alpha$ und des Abstands $w_{gx}$ wird eine erhebliche Reduzierung der Schwingungen und der Gleichkraft an der Offset-Vorrichtung bzw. der exzentrischen Lagerungsachse und der damit verbundenen Belastungen erreicht.

In Fig. 10 ist eine Tabelle gezeigt, die den Einfluss harmonischer Anteile auf die Belastung an der Offset-Vorrichtung bzw. an der exzentrischen Lagerungsachse in Abhängigkeit von der Anzahl der Flügel der Antriebsvorrichtung darstellt. Der Parameter n 81 bezeichnet die Anzahl der Flügel. Der Parameter j 83 gibt die Ordnungszahl der harmonische Anteile der Belastungen an der Offset-Vorrichtung resultierend von einzelnen Flügeln an, wobei die Belastungen in einem mit der Antriebsvorrichtung mitrotierenden Bezugssystem berechnet wurden. Begibt man sich in ein ortsfestes Bezugssystem, so resultiert daraus eine Umverteilung und eine Überlagerung der harmonischen Anteile j 83 aller Flügel. In dem ortsfesten Bezugssystem bezeichnet der Parameter k 82 die Ordnungszahl der harmonischen Anteile der Belastungen an der Offset-Vorrichtung. Die Tabelle gibt für jeden harmonischen Anteil k 82 im ortsfesten Bezugssystem an, welche harmonischen Anteile j 83 im mitrotierenden Bezugssystem diesen bestimmen.

Für das ortsfeste Bezugssystem lässt sich aus der Tabelle von Fig. 10 Folgendes ableiten. Unabhängig von der Anzahl der Flügel resultiert ein grundharmonischer Anteil im mitrotierenden Bezugssystem stets in einer Gleichkraft an der Offset-Vorrichtung. Dies wird durch die Einträge in der mit 84 bezeichneten Spalte deutlich. In anderen Worten bewirken die grundharmonischen Anteile j = 1 in der Belastung des Flügels im mitrotierenden Bezugssystem eine Gleichkraft, gekennzeichnet durch den Beitrag nullter Ordnung k = 0, im ortsfesten Bezugssystem. Des Weiteren reagieren Antriebsvorrichtungen mit unterschiedlicher Anzahl von Flügeln unterschiedlich auf harmonische Anteile j 83 in den Belastungen im mitrotierenden Bezugssystem. Dies zeigt sich bereits daraus, dass im ortsfesten Bezugssystem unterschiedliche harmonische Anteile k verschwinden; verschwindende harmonische Anteile sind durch leere Felder 87 bezeichnet.

Der Tabelle von Fig. 10 lässt sich schließlich entnehmen, dass eine Antriebsvorrichtung mit n = 5 Flügeln besonders vorteilhaft ist. Dies liegt zunächst daran, dass für den Fall n = 5 die harmonischen Anteile der Belastungen mit Ordnungszahl k = 1, 2, 3, 4 im ortsfesten Bezugssystem verschwinden. Die harmonischen Anteile 86 mit den hohen Ordnungszahlen k = 10 und k = 15 sind stark unterdrückt. Gemäß der Tabelle aus Fig. 10 resultieren die Belastungen an der Offset-Vorrichtung im Falle von n = 5 Flügeln daher im Wesentlichen aus der Gleichkraft k = 0, 84, und dem harmonischen Anteil fünfter Ordnung, k = 5, 85. Aus der Tabelle geht weiter hervor, dass die Gleichkraft 84 im ortsfesten Bezugssystem durch die grundharmonische Schwingung, j = 1, im Flügel bzw. in der Kopplungsvorrichtung im mitrotierenden Bezugssystem bewirkt wird. Diese Gleichkraft kann wie vorstehend im Zusammenhang mit Figuren 8, 9 beschrieben durch eine Positionierung des Abstands $w_{gx}$ in einem bestimmten Abstand vom Massenschwerpunkt des Flügels minimiert werden. Der harmonische Anteil fünfter Ordnung resultiert gemäß Fig. 10 aus den harmonischen Anteilen vierter, j = 4, und sechster, j = 6, Ordnung der Schwingungen im mitrotierenden Bezugssystem. Dabei handelt es sich um gerade höher harmonische Anteile. Wie im Zusammenhang mit den in Figuren 3-7 gezeigten Ausführungsbeispielen beschrieben, können diese Anteile durch eine erfindungsgemäße Wahl des Ankopplungspunkts der Kopplungsvorrichtung an den Flügel in einem bestimmten Winkel von der Tangentialebene durch den Flügel-Lagerungspunkt minimiert werden.

Dies zeigt, dass die erfindungsgemäßen Aspekte bei einer Antriebsvorrichtung mit fünf Flügeln eine besonders vorteilhafte Reduzierung der Belastungen an der Offset-Vorrichtung bzw. an der exzentrischen Lagerungsachse bewirken.

Liste der Bezugzeichen

1      Antriebsvorrichtung
100    Fluggerät / Cyclogyro

| | |
|---|---|
| 11 | Scheibe der Antriebsvorrichtung 1 |
| 2 | Flügel |
| 210 | Profilnase des Flügels 2 |
| 220 | Profilhinterkante des Flügels 2 |
| 230 | Profilsehne des Flügels 2 |
| 240 | Profilmittellinie des Flügels 2 |
| 241 | Oberseite des Flügels 2 |
| 242 | Unterseite des Flügels 2 |
| 250 | Massenschwerpunkt des Flügels 2 |
| 260 | Ebene, die durch Massenschwerpunkt 250 geht, und parallel zur Drehachse 51 und parallel zur Profilsehne 230 verläuft |
| 3 | Pitch-Mechanismus |
| 31 | Kopplungsvorrichtung des Pitch-Mechanismus 3 / Pleuel |
| 32 | Ankopplungspunkt der Kopplungsvorrichtung 31 an den Flügel 2 |
| 33 | Lagerungsvorrichtung des Pitch-Mechanismus 3 / Flügel-Lagerungsachse / Flügel-Lagerungspunkt |
| 300 | Kreisbogen der Pitch-Bewegung |
| 4 | Offset-Vorrichtung |
| 41 | exzentrische Lagerungsachse |
| 42 | Ankopplungspunkt der Kopplungsvorrichtung 31 an die Offset-Vorrichtung 4 |
| 43 | Offset-Abstand der exzentrischen Lagerungsachse 41 von der Drehachse 51 der Antriebsvorrichtung 1 |
| 51 | Drehachse der Antriebsvorrichtung 1 |
| 52 | Kreisbahn um die Drehachse 51 |
| 53 | Pfeil zur Angabe der Rotationsrichtung der Antriebsvorrichtung 1 |
| 54 | Tangentialebene / Tangente an die Kreisbahn 52 durch die Flügel-Lagerungsachse 33 |
| 61 | Verbindungselement zur indirekten Ankopplung der Kopplungsvorrichtung 31 an den Flügel 2 |
| 62 | Verbindungselement zur Ankopplung der Kopplungsvorrichtung 31 an den Flügel 2 |
| 7 | Graph der normierten Belastungen an der Offset-Vorrichtung 4 in Abhängigkeit des Winkels $w_\alpha$ |
| 71 | Ordinate, die normierte Belastungen an der Offset-Vorrichtung 4 bezeichnend |
| 72 | Abszisse, den Winkel $w_\alpha$ in Grad bezeichnend |
| 81 | Anzahl n der Flügel |
| 82 | Ordnungszahl k der harmonische Anteile der Belastungen an der Offset-Vorrichtung angegeben in einem ortsfesten Bezugssystem |
| 83 | Ordnungszahl j der harmonische Anteile der Belastungen an der Offset-Vorrichtung angegeben in einem mit der Antriebsvorrichtung mitrotierenden Bezugssystem |
| 84, | 85, 86 Nichtverschwindende Beiträge zur Belastung an der Offset-Vorrichtung |
| 87 | verschwindende Beiträge |
| 9 | Graph der normierten Gleichkraft an der Offset-Vorrichtung 4 in Abhängigkeit des Abstands $w_{gx}$ der Flügel-Lagerungsachse 33 vom Massenschwerpunkt 250 |
| 91 | x-Komponente der Gleichkraft an der exzentrischen Lagerungsachse 41 |
| 92 | y-Komponente der Gleichkraft an der exzentrischen Lagerungsachse 41 |
| 93 | Ordinate, die normierte Gleichkraft an der Offset-Vorrichtung 4 bezeichnend |
| 94 | Abszisse, den Abstand $w_{gx}$ in Millimetern bezeichnend |
| $\alpha$ | Pitch-Winkei / Pitch-Bewegung |
| $w_\alpha$ | Winkel zwischen Tangente 54 an die Kreisbahn und Verbindungstrecke Ankopplungspunkt 32 zu Flügel-Lagerungsachse 33 |
| $w_{gx}$ | Abstand der Flügel-Lagerungsachse 33 von Ebene 260 durch den Massenschwerpunkt 250 und parallel zur Profilsehne 230 |
| $w_{gz}$ | Abstand der Flügel-Lagerungsachse 33 von Ebene durch den Massenschwerpunkt 250 und senkrecht zur Profilsehne 230 |
| r | Abstand der Flügel-Lagerungsachse 33 von der Drehachse 51 der Antriebsvorrichtung 1 |
| $\ell$ | Abstand des Massenschwerpunkt 250 vom Flügel-Lagerungspunkt 33 |
| $\rho$ | Winkel zwischen Flügel-Lagerungsachse 33, Ankopplungspunkt 32 und Drehachse 51 |
| $F_Z$ | Zentrifugalkraft auf den Flügel wirkend |

**Patentansprüche**

1. Antriebsvorrichtung (1) für ein Fluggerät (100), umfassend

- einen Flügel (2), der entlang einer Kreisbahn (52) um eine Drehachse (51) der Antriebsvorrichtung (1) drehbar ist;
- einen Pitch-Mechanismus (3) mit einer Kopplungsvorrichtung (31) und einer Lagerungsvorrichtung (33),

- wobei der Flügel (2) durch die Lagerungsvorrichtung um eine Flügel-Lagerungsachse (33) parallel zur Drehachse (51) der Antriebsvorrichtung schwenkbar gelagert ist; und

- eine Offset-Vorrichtung (4), an die der Flügel durch die Kopplungsvorrichtung (31) in einem Anbindungspunkt (42) angekoppelt ist, wobei die Offset-Vorrichtung (4) eine exzentrische Lagerungsachse (41) definiert, die in einem einstellbaren Offset-Abstand (43) parallel zur Drehachse (51) der Antriebsvorrichtung gelagert ist,

- sodass die Rotation des Flügels (2) entlang der Kreisbahn (52) um die Drehachse (51) der Antriebsvorrichtung eine Pitch-Bewegung (a) des Flügels (2) bewirkt, wenn der Offset-Abstand (43) auf einen Wert ungleich Null eingestellt ist; und
- wobei die Kopplungsvorrichtung (31) an den Flügel (2) in einem Ankopplungspunkt (32) angekoppelt ist, wobei der Ankopplungspunkt (32) derart positioniert ist, dass die Ebene, die die Flügel-Lagerungsachse (33) und den Ankopplungspunkt (32) umfasst, und die Tangentialebene (54) an die Kreisbahn (52) durch die Flügel-Lagerungsachse (33) einen bestimmten, nicht-verschwindenden Winkel ($w_\alpha$) einschließen, wenn der Offset-Abstand (43) auf Null eingestellt wird;
wobei der bestimmte, nicht-verschwindende Winkel ($w_\alpha$) derart eingestellt ist, dass der Winkel zwischen

- der Ebene, die die Flügel-Lagerungsachse (33) und den Ankopplungspunkt (32) umfasst, und
- der Ebene, die

die Drehachse (51) der Antriebsvorrichtung und
die Verbindungsstrecke von dem Ankopplungspunkt (32) zur Drehachse (51) umfasst,

etwa 90° beträgt, wenn der Offset-Abstand (43) auf Null eingestellt wird, und
wobei der Ankopplungspunkt (32) der Kopplungsvorrichtung (31) an den Flügel außerhalb des Flügelprofils liegt.

2. Antriebsvorrichtung (1) nach Anspruch 1, wobei der bestimmte, nicht-verschwindende Winkel ($w_\alpha$) einen Wert einnimmt, der im Bereich von 90 % bis 110 % des Verhältnisses von Abstand Flügel-Lagerungsachse (33) nach Ankopplungspunkt (32) zu Abstand (r) Drehachse (51) nach Flügel-Lagerungsachse (33) liegt, wenn der Offset-Abstand (43) auf Null eingestellt wird.

3. Antriebsvorrichtung (1) nach einem der vorhergehenden Ansprüche, wobei die Flügel-Lagerungsachse (33) bezüglich der Ebene, die durch den Massenschwerpunkt (250) des Flügels und parallel sowohl zur Drehachse (51) als auch zur Profilsehne (230) des Flügels verläuft, zur Drehachse (51) der Antriebsvorrichtung hin um einen bestimmten Abstand ($w_{gx}$) verschoben ist.

4. Antriebsvorrichtung (1) nach Anspruch 3, wobei die Flügel-Lagerungsachse (33) außerhalb des Flügelprofils verläuft.

5. Antriebsvorrichtung (1) nach einem der vorhergehenden Ansprüche, weiter ein Verbindungselement (61) aufweisend, wobei das Verbindungselement (61), in dem Punkt, in dem der Flügel (2) durch die Lagerungsvorrichtung (33) schwenkbar gelagert ist, starr mit dem Flügel . (2), und im Ankopplungspunkt (32) des Flügels beweglich mit der Kopplungsvorrichtung (31) verbunden ist.

6. Antriebsvorrichtung (1) nach einem der vorhergehenden Ansprüche, wobei die Kopplungsvorrichtung (31) ein Pleuel umfasst, der die den Anbindungspunkt (42) der Offset-Vorrichtung mit dem Ankopplungspunkt (32) des Flügels verbindet.

7. Antriebsvorrichtung (1) nach einem der vorhergehenden Ansprüche, umfassend weitere Flügel (2) mit jeweils zugehörigem Pitch-Mechanismus (3), wobei alle Flügel (2) und Pitch-Mechanismen (3) der Antriebsvorrichtung gleichartig sind, und wobei die Flügel (2) der Antriebsvorrichtung gleichmäßig entlang der Kreisbahn (52) um die Drehachse (51) der Antriebsvorrichtung verteilt sind.

8. Antriebsvorrichtung (1) nach Anspruch 7, die insgesamt fünf Flügel (2) umfasst.

9. Antriebsvorrichtung (1) nach einem der vorhergehenden Ansprüche, wobei die Antriebsvorrichtung ein Cyclogyro-Rotor ist.

**Claims**

1. A drive device (1) for an aircraft (100), comprising

   - a blade (2) which can be rotated about an axis of rotation (51) of the drive device (1) along a circular path (52);
   - a pitch mechanism (3) having a coupling device (31) and a bearing device (33),

     - wherein the blade (2) is mounted by the bearing device for pivoting about a blade bearing axis (33) parallel to the axis of rotation (51) of the drive device; and

   - an offset device (4) to which the blade is coupled by the coupling device (31) at a connection point (42), wherein the offset device (4) defines an eccentric bearing axis (41) which is mounted at an adjustable offset distance (43) parallel to the axis of rotation (51) of the drive device,

     - such that the rotation of the blade (2) along the circular path (52) about the axis of rotation (51) of the drive device effects a pitch movement (a) of the blade (2) when the offset distance (43) is set to a nonzero value; and
     - wherein the coupling device (31) is coupled to the blade (2) at a coupling point (32), wherein the coupling point (32) is positioned in such a way that the plane that comprises the blade bearing axis (33) and the coupling point (32) and the tangential plane (54) to the circular path (52) through the blade bearing axis (33) include a certain, non-vanishing angle $(w_\alpha)$ when the offset distance (43) is set to zero; wherein the certain, non-vanishing angle $(w_\alpha)$ is set in such a way that the angle between

       - the plane that comprises the blade bearing axis (33) and the coupling point (32) and
       - the plane that comprises the axis of rotation (51) of the drive device and the connection line from the coupling point (32) to the axis of rotation (51) is almost 90° when the offset distance (43) is set to zero, and wherein the coupling point (32) of the coupling device (31) at the blade is positioned outside of the blade profile.

2. The drive device (1) according to claim 1, wherein the certain, non-vanishing angle $(w_\alpha)$ assumes a value lying in the range of 90 % to 110 % of the ratio of the distance of blade bearing axis (33) to coupling point (32) to the distance (r) of axis of rotation (51) to blade bearing axis (33) when the offset distance (43) is set to zero.

3. The drive device (1) according to any of the preceding claims, wherein the blade bearing axis (32) is shifted toward the axis of rotation (51) of the drive device by a certain distance $(w_{gx})$ relative to the plane that extends through the center of mass (250) of the blade and that extends parallel to both the axis of rotation (51) and the chord (230) of the blade.

4. The drive device (1) according to claim 3, wherein the blade bearing axis (33) extends outside of the blade profile.

5. The drive device (1) according to any of the preceding claims, further comprising a connection element (61), wherein the connection element (61), at the point at which the blade (2) is mounted for pivoting by the bearing device (33), is connected rigidly with the blade (2), and at the coupling point (32) of the blade is connected movably with the coupling device (31).

6. The drive device (1) according to any of the preceding claims, wherein the coupling device (31) comprises a conrod which connects the connection point (42) of the offset device with the coupling point (32) of the blade.

7. The drive device (1) according to any of the preceding claims, comprising further blades (2) with a respectively associated pitch mechanism (3), wherein all blades (2) and pitch mechanisms (3) of the drive device are of similar type, and wherein the blades (2) of the drive device are evenly distributed about the axis of rotation (51) of the drive device along the circular path (52).

8. The drive device (1) according to claim 7, which comprises a total of five blades (2).

**9.** The drive device (1) according to any of the preceding claims, wherein the drive device is a cyclogyro rotor.

**Revendications**

**1.** Dispositif de propulsion (1) pour un aéronef (100), comprenant :

- une pale (2) pouvant tourner le long d'une trajectoire circulaire (52) autour d'un axe de rotation (51) du dispositif de propulsion (1) ;
- un mécanisme de pas (3) comprenant un dispositif d'accouplement (31) et un dispositif de support (33),

  - dans lequel la pale (2) est supportée de manière pivotante par le dispositif de support autour d'un axe de support de pale (33) parallèlement à l'axe de rotation (51) du dispositif de propulsion ; et

- un dispositif de décalage (4) auquel la pale est accouplée par le dispositif d'accouplement (31) en un point de liaison (42), dans lequel le dispositif de décalage (4) définit un axe de support excentré (41) qui est supporté à une distance de décalage réglable (43) parallèlement à l'axe de rotation (51) du dispositif de propulsion,

  - de sorte que la rotation de la pale (2) le long de la trajectoire circulaire (52) autour de l'axe de rotation (51) du dispositif de propulsion provoque un mouvement de pas () de la pale (2) lorsque la distance de décalage (43) est réglée à une valeur non nulle ; et
  - dans lequel le dispositif d'accouplement (31) est accouplé à la pale (2) en un point d'accouplement (32), dans lequel le point d'accouplement (32) est positionné de telle sorte que le plan qui comprend l'axe de support de pale (33) et le point d'accouplement (32), et le plan tangent (54) à la trajectoire circulaire (52) passant par l'axe de support de pale (33) forment un angle non infiniment petit déterminé (w) lorsque la distance de décalage (43) est réglée à zéro ; dans lequel ledit angle non infiniment petit déterminé (w) est réglé de telle sorte que l'angle entre

    - le plan qui comprend l'axe de support de pale (33) et le point d'accouplement (32) et
    - le plan qui comprend l'axe de rotation (51) du dispositif de propulsion et le chemin de liaison entre le point d'accouplement (32) et l'axe de rotation (51)

  soit d'environ 90° lorsque la distance de décalage (43) est réglée à zéro et dans lequel le point d'accouplement (32) du dispositif d'accouplement (31) à la pale se situe à l'extérieur du profil de pale.

**2.** Dispositif de propulsion (1) selon la revendication 1, dans lequel ledit angle non infiniment petit déterminé (w) prend une valeur qui se situe dans la plage de 90 % à 110 % du rapport de la distance entre l'axe de support de pale (33) et le point d'accouplement (32) sur la distance (r) entre l'axe de rotation (51) et l'axe de support de pale (33) lorsque la distance de décalage (43) est réglée à zéro.

**3.** Dispositif de propulsion (1) selon l'une des revendications précédentes, dans lequel l'axe de support de pale (33) est déplacé vers l'axe de rotation (51) du dispositif de propulsion d'une distance déterminée ($w_{gx}$) par rapport au plan passant par le centre de masse (250) de la pale et parallèlement à la fois à l'axe de rotation (51) et à la corde de profil (230) de la pale.

**4.** Dispositif de propulsion (1) selon la revendication 3, dans lequel l'axe de support de pale (33) s'étend à l'extérieur du profil de pale.

**5.** Dispositif de propulsion (1) selon l'une des revendications précédentes, comprenant en outre un élément de liaison (61), dans lequel l'élément de liaison (61) est relié de manière rigide à la pale (2) au point où la pale (2) est supportée de manière pivotante par le dispositif de support (33), et de manière mobile au dispositif d'accouplement (31) au point d'accouplement (32) de la pale.

**6.** Dispositif de propulsion (1) selon l'une des revendications précédentes, dans lequel le dispositif d'accouplement (31) comprend une bielle qui relie le point de liaison (42) du dispositif de décalage au point d'accouplement (32) de la pale.

7. Dispositif de propulsion (1) selon l'une des revendications précédentes, comprenant d'autres pales (2) avec respectivment un mécanisme de pas (3) associé, dans lequel toutes les pales (2) et tous les mécanismes de pas (3) du dispositif de propulsion sont du même type et dans lequel les pales (2) du dispositif de propulsion sont réparties uniformément le long de la trajectoire circulaire (52) autour de l'axe de rotation (51) du dispositif de propulsion.

8. Dispositif de propulsion (1) selon la revendication 7, comprenant au total cinq pales (2).

9. Dispositif de propulsion (1) selon l'une des revendications précédentes, dans lequel le dispositif de propulsion est un rotor de cyclocoptère.

Fig. 1

EP 3 715 249 B1

Fig. 2

EP 3 715 249 B1

Fig. 3

Fig. 4

Fig. 5a

Fig. 5b

Fig. 5c

Fig. 6

Fig. 7a

Fig. 7b

EP 3 715 249 B1

Fig. 8

**Gleichkraft an der Offset-Vorrichtung**
**normiert auf $F_X$ bei $w_{gx} = 0$**

Fig. 9

| n | k | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|----|----|----|----|----|----|
| 3 |   | 1 |   |   | 2 4 |   |   | 5 7 |   |   | 8 10 |    |    | 11 13 |    |    | 14 16 |
| 4 |   | 1 |   |   |   | 3 5 |   |   |   | 7 9 |   |    |    | 11 13 |    |    |    |
| 5 |   | 1 |   |   |   |   | 4 6 |   |   |   |   | 9 11 |    |    |    |    | 14 16 |
| 6 |   | 1 |   |   |   |   |   | 5 7 |   |   |   |    |    | 11 13 |    |    |    |

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007200029 A1
- US 4194707 A